# FASCICULE DE BREVET EUROPEEN

(11) **EP 4 384 115 B1**
(45) Date de publication et mention de la délivrance du brevet: **14.01.2026**
(21) Numéro de dépôt: 22754408.7
(22) Date de dépôt: 25.07.2022
(51) Int. Cl.: A61C 8/00, A61C 13/265, A61C 13/273

(54) **DISPOSITIF DE LIAISON ET SYSTÈME DE LIAISON POUR RECONSTRUCTION DENTAIRE SUR IMPLANT, RECONSTRUCTION DENTAIRE SUR IMPLANT, PROCÉDÉ DE RÉALISATION DE RECONSTRUCTION DENTAIRE**
VERBINDUNGSVORRICHTUNG UND VERBINDUNGSSYSTEM ZUR ZAHNREKONSTRUKTION AN EINEM IMPLANTAT, ZAHNREKONSTRUKTION AN EINEM IMPLANTAT UND VERFAHREN ZUR DURCHFÜHRUNG VON ZAHNREKONSTRUKTIONEN
CONNECTION DEVICE AND CONNECTION SYSTEM FOR DENTAL RECONSTRUCTION ON AN IMPLANT, DENTAL RECONSTRUCTION ON AN IMPLANT, AND METHOD FOR PERFORMING DENTAL RECONSTRUCTION

(30) Priorité: 08.08.2021 FR 2108573; 20.09.2021 US 202163246108 P
(43) Date de publication de la demande: 19.06.2024
(73) Titulaire: Ajust Sàrl, 2000 Neuchatel (CH)
(72) Inventeur: TANIMURA, Rémy, 92200 NEUILLY-SUR-SEINE (FR)
(74) Mandataire: Talbot, Alexandre
(86) Numéro de dépôt international: PCT/EP2022/070751
(87) Numéro de publication internationale: WO 2023/016787

(56) Documents cités:
- DE-U1- 20 208 165
- US-A1- 2020 015 940

## Description

### Domaine technique

L'invention concerne un dispositif de liaison, un système de liaison pour une reconstruction dentaire sur implant, une reconstruction dentaire sur implant, un procédé de réalisation d'une reconstruction dentaire sur implant.

### État de la technique

Pour réaliser une reconstruction dentaire sur implant, il est classique de fixer un implant dans l'os des maxillaires puis de fixer une prothèse dentaire directement sur l'implant ou par l'intermédiaire d'un pilier. Un pilier est un élément intermédiaire qui est fixé sur l'implant et qui sert à accrocher une prothèse dentaire. Le pilier se trouve entre l'implant et la prothèse dentaire. Le pilier assure la connexion mécanique entre la prothèse dentaire et l'implant, en général avec l'aide d'une vis de pilier. L'implant possède une section filetée interne sur laquelle la prothèse est fixée. Une vis traverse la prothèse et le pilier pour prendre appui sur l'implant qui sert d'ancrage à la reconstruction dentaire. De manière classique, l'implant possède une section taraudée qui permet de fixer directement ou indirectement la prothèse dentaire. Différents exemples de réalisation d'implants peuvent être illustrés dans les documents JP5519985, JP2018-538014, EP1943978, EP2053985, EP3421004, EP3777760, WO2004/032786, WO2013/125924, WO2017/121898, US5,482,463, US8,033,826, US8,317,515, US2011/0213425, US2012/301850 et US2015/182309. Le document EP2480161 illustre un pilier réalisé en plusieurs parties. Les documents EP2127612 et US6,663,388 illustrent également un pilier réalisé en deux parties avec la tête qui définit un axe de fixation pour une prothèse. L'axe de fixation de la prothèse est non colinéaire avec l'axe de l'implant. Les documents US6,932,606 et US7,300,283 illustrent un dispositif d'anti-rotation formé par des bras déformables qui s'insèrent dans des cavités du pilier.

Un grand nombre des reconstructions implantaires nécessite l'utilisation d'une colle ou de ciment qui assure la fixation de la prothèse dentaire au pilier. Cependant, il est particulièrement intéressant de ne pas utiliser de colle ou de ciment. En effet, le collage n'est pas un procédé reproductible, notamment dans l'épaisseur utilisée ainsi que dans la qualité de la colle. L'élimination de son excès en bouche est souvent difficile. Par ailleurs, le collage n'est pas réversible ce qui impose un travail long et pénible lorsqu'il faut intervenir sur une reconstruction qui a été collée. La colle peut être disposée sur la prothèse (entre la prothèse et le pilier) hors de la bouche avant une nouvelle insertion de l'ensemble sur l'implant. **Il** s'agit alors d'une prothèse transvissée. Cette construction n'est pas stérile et ne peut pas être placée dans un autoclave (134°C).

Lorsque l'axe d'insertion de la prothèse ne correspond pas à celui de l'axe de l'implant, il est possible d'utiliser les piliers décrits plus haut. Cependant, comme il y a toujours un travail d'ajustage des points de contact de la prothèse dentaire, ce travail peut devenir très difficile avec un pilier collé au préalable avec la prothèse qui sera transfixée dans l'implant. Par exemple, une retouche réalisée sur une prothèse en céramique peut nécessiter une nouvelle cuisson et la colle doit être éliminée auparavant par une cuisson à haute température. Des phénomènes d'oxydation et de contamination peuvent alors être observés sur les piliers.

Pour les prothèses réalisées intégralement en céramique usinée et qui sont visées directement sur les implants, sans collage, des problèmes d'étanchéités ont été observés entre les différents composants de la reconstruction implantaire. Il existe également une concentration inadéquate des forces lors des phases de mastication sur cet assemblage. Cette mauvaise répartition des forces liée au problème de tolérance et/ou à l'inadaptation parfaite des pièces peut entrainer une fracture de la prothèse dentaire ou des composants.

Il y a donc un intérêt à utiliser une prothèse dentaire transfixée à l'aide d'une vis sans colle avec un dispositif de liaison, offrant une meilleure maitrise des dimensions des différents constituants de la reconstruction implantaire.

Différentes configurations de dispositifs de liaison sur un pilier sont illustrées dans le document US2020/0138552. Ce document illustre un dispositif de liaison vissé sur le pilier pour une reconstruction scellée, avec un ciment. Par ailleurs, il décrit une prothèse dentaire transvissée directement sur le pilier sans dispositif de liaison. A l'usage, il ressort qu'un tel mode de réalisation est difficile à utiliser. Le document US 10,010,384 illustre un pilier avec une tête déformable et une prothèse dentaire. La vis de fixation est montée sur le pilier avant que l'ensemble soit inséré dans la prothèse. La vis de transfixation du pilier est insérée au préalable dans celui-ci afin de réduire son encombrement et permettre l'insertion d'un tournevis dans le trou traversant de la prothèse dentaire qui est donc réduit. La prothèse dentaire possède une rainure dans l'intrados qui permet l'expansion de la tête du pilier par l'intermédiaire de la tête de la vis du pilier pour réaliser la fixation de ces deux éléments. Cette vis fixe la prothèse avec l'implant et empêche la déformation inverse de la tête du pilier de sorte que la prothèse soit maintenue fixement sur le pilier. Le pilier prend directement en charge le blocage de la prothèse. Cette configuration complique l'ajustage des points de contacts de la prothèse car l'axe de la connexion du pilier et qui est confondu avec celui de l'implant doit être compatible avec l'axe d'insertion de la prothèse. Ces axes sont souvent non colinéaires. Par ailleurs, le pilier doit être placé et retiré plusieurs fois, ce qui engendre la destruction de l'attache tissulaire péri-implantaire et sa contamination.

Le document KR 10-1943437 présente un enseignement sensiblement identique avec une reconstruction implantaire avec un pilier fixé dans un implant qui possède une section taraudée. La prothèse dentaire sous la forme d'une dent unique est ajourée au moyen d'un trou traversant destiné au passage d'une vis de fixation. La prothèse dentaire est posée sur un pilier qui possède également un trou traversant. La vis de fixation traverse la prothèse dentaire et le pilier. La vis de fixation coopère avec la section taraudée de l'implant pour réaliser la fixation de la prothèse dentaire avec l'implant.

Le pilier et l'implant possèdent des moyens d'anti-rotation qui empêchent la rotation du pilier par rapport à l'implant autour d'un arbre de rotation matérialisé par la vis de fixation. Le pilier possède des bras mobiles dans sa partie coronaire. La vis de fixation possède une section croissante depuis son pied jusqu'à sa tête de sorte que l'installation de la vis de fixation entraine un écartement des bras mobiles vers l'extérieur. Les bras mobiles s'insèrent dans des cavités de la prothèse dentaire pour former un moyen d'anti-rotation entre la prothèse dentaire et le dispositif de fixation. La forme de la tête de la vis de fixation et la forme du trou traversant dans la prothèse dentaire se complètent pour assurer une bonne fixation mécanique. La prothèse dentaire est en appui sur le pilier qui est lui-même en appui sur l'implant.

Un enseignement sensiblement équivalent est présent dans le document US 2020/0015940 qui présente un implant fixé dans l'os maxillaire, un pilier monté en appui sur l'implant et une prothèse dentaire montée en appui sur le pilier. La prothèse dentaire et le pilier possèdent chacun un trou traversant. Les deux trous traversants prolongent la portion taraudée de l'implant. Le pilier est monté sur l'implant puis la prothèse dentaire est montée sur le pilier avant d'insérer la vis de fixation. La vis de fixation possède une section croissante depuis son pied jusqu'à sa tête. La tête du pilier est munie de plusieurs bras déformables qui s'insèrent dans des cavités de la prothèse dentaire lors de la fixation de la vis sur l'implant. La fixation de la vis dans l'implant empêche la déformation des bras déformables et la séparation entre la prothèse dentaire et le pilier. Dans cette configuration, il n'y a pas de dispositif de liaison et la vis de fixation assure à elle seule le blocage du pilier ainsi que celui des ailettes pour maintenir la prothèse dentaire. Cette configuration nécessite comme l'exemple précédent d'avoir un axe d'implant colinéaire avec l'axe d'insertion de la prothèse. En pratique, il est rare de rencontrer cette situation. L'axe de l'implant est différent de celui de l'insertion de la prothèse. La vis de fixation possède une extrémité inférieure filetée qui se fixe sur une zone filetée du pilier d'ancrage. La vis de fixation possède également une tête évasée qui agit sur les ailettes de fixation d'une partie supérieure d'un élément intermédiaire et une autre zone évasée qui vient en appui sur une butée d'une partie inférieure de l'élément intermédiaire. En vissant la vis de fixation dans le pilier d'ancrage, la vis de fixation plaque la partie inférieure de l'élément intermédiaire contre le pilier d'ancrage et elle déforme les ailettes pour monter fixement la prothèse sur la partie supérieure de l'élément intermédiaire. La vis possédant une tête évasée et une portion intermédiaire également évasée venant en appui sur l'élément intermédiaire, la profondeur d'enfoncement de la vis dans le plot d'ancrage définit la pression exercée entre la partie inférieure de l'élément intermédiaire et le plot d'ancrage ainsi que la pression exercée entre la partie supérieure de l'élément intermédiaire et la prothèse. Cette configuration est difficile à régler car selon les écarts de fabrication qui existent sur la vis de fixation, la prothèse, le pilier d'ancrage, la partie inférieure de l'élément intermédiaire et la partie supérieure de l'élément intermédiaire. Ces difficultés de réglage entrainent des démontages et remontages multiples de la prothèse, de la vis de fixation et de la pièce intermédiaire. Par ailleurs, il apparait que cette configuration ne semble pas en mesure d'empêcher efficacement un blocage de la rotation de la prothèse par rapport au pilier d'ancrage.

Le document WO2018/138630 divulgue une reconstruction dentaire avec un implant en céramique recevant un élément de liaison déformable et une prothèse dentaire en appui sur l'implant. L'implant ne possède pas une section taraudée destinée à recevoir une vis de fixation directement mais par l'intermédiaire d'un cylindre avec un système anti-rotationnel et une rainure radiale recevant la portion inférieure déformable de l'élément de liaison. La partie inférieure et la partie supérieure de l'élément de liaison sont chacune munis de bras déformables. L'élément de liaison est encliqueté dans l'implant avant d'insérer la vis de fixation. La prothèse dentaire est encliquetée à la partie supérieure du dispositif de liaison.

Une fois la vis de fixation serrée dans la section taraudée, les bras déformables du dispositif de liaison ne peuvent plus se déformer et la prothèse dentaire est montée fixement sur l'implant. Cet élément de liaison avec son insert fileté intérieurement concerne l'assemblage d'une prothèse dentaire en céramique directement sur un implant en céramique sans section taraudée. Nous retrouvons encore, sur le plan pratique, les difficultés d'insertion de la prothèse, du réglage des points de contact et ceux liés aux tolérances d'adaptation des composants.

### Exposé de l'invention

Un objet de l'invention consiste à pallier ces inconvénients, et plus particulièrement à fournir un dispositif de liaison qui est plus performant que les dispositifs de l'art antérieur pour lier la prothèse dentaire à un ancrage.

On tend à résoudre ces inconvénients au moyen d'un dispositif de liaison pour une reconstitution dentaire sur implant qui comporte.
- un corps s'étendant selon une direction longitudinale avec une extrémité de pied et une extrémité de tête, le corps définissant un trou traversant destiné à recevoir une vis de fixation et définissant une butée pour une tête de vis de ladite vis de fixation, le trou traversant s'élargissant depuis la butée en direction de la zone de pied pour former une cavité destinée à recouvrir un plot d'un ancrage 1 implantaire maxillaire muni d'une portion taraudée, le corps possédant une section externe décroissante depuis l'extrémité de pied jusqu'à l'extrémité de tête ;
- un corps possédant une paroi externe qui forme un dispositif antirotation externe qui s'étend face à la cavité selon une direction perpendiculaire à l'axe longitudinal, la prothèse étant destinée à être en vis-à-vis du plot perpendiculairement à l'axe longitudinal.

La paroi interne du corps définissant la cavité forme un dispositif antirotation interne configuré pour bloquer la rotation du dispositif de liaison par rapport au plot, le dispositif antirotation interne s'étendant depuis la zone de pied, le dispositif d'antirotation interne étant en vis-à-vis du dispositif d'antirotation externe perpendiculairement à l'axe longitudinal.

Un bloqueur est fixé au corps et monté mobile entre une position rétractée et une position d'extension, la position d'extension ayant une section externe plus importante que la section de la position rétractée, le bloqueur obstruant partiellement le trou traversant du dispositif de liaison pour se déformer au contact de la vis de fixation, le bloqueur étant destiné à s'insérer dans une rainure ou un renfoncement d'une prothèse recouvrant le dispositif de liaison pour immobiliser la prothèse sur le dispositif de liaison selon la direction longitudinale.

Selon un aspect de l'invention, le bloqueur est disposé dans la moitié supérieure du dispositif de liaison et disposé entre la butée et une extrémité sommitale du corps. Préférentiellement, la butée sépare le bloqueur et la première partie du dispositif antirotation externe et/ou sépare le bloqueur et la cavité.

De manière préférentielle, le bloqueur est en alliage à mémoire de forme.

Dans un mode de réalisation particulier, la paroi externe du corps est recouverte par une couche de recouvrement en matériau polymère compressible.

Avantageusement, la paroi externe du corps possède au moins une portion tronconique.

L'invention a également pour objet un système de liaison qui est plus efficace que les systèmes de liaison de l'art antérieur et notamment pour lier une prothèse à un ancrage.

On tend à atteindre ce résultat au moyen d'un système de liaison pour prothèse de reconstitution dentaire qui comporte un dispositif de liaison selon l'une quelconque des configurations et comportant une vis de fixation ayant une tête à section circulaire pour avoir une déformation constante du bloqueur indépendamment de l'enfoncement de la tête de vis dans le trou traversant, la section circulaire déformant le bloqueur lorsque la tête de vis appuie sur la butée.

Avantageusement, la tête de vis est intégralement encastrée dans le trou traversant lorsque la tête de vis est en appui sur la butée.

Dans un mode de réalisation particulier, la vis de fixation possède une longueur qui est inférieure à la longueur du dispositif de liaison, la longueur étant mesurée selon l'axe longitudinal.

Préférentiellement, l'ancrage possède un plot destiné à être saillant d'une gencive, le plot s'étendant selon une direction longitudinale et définissant une portion taraudée s'étendant au moins partiellement hors de la gencive et de l'os maxillaire, le plot ayant une section externe complémentaire de la section interne de la cavité, le plot et la cavité formant un bloqueur de rotation configuré pour empêcher la rotation du dispositif de liaison par rapport au plot autour d'un axe parallèle à l'axe longitudinal, la vis de fixation se vissant dans la portion taraudée, le dispositif de liaison étant monté amovible par rapport au plot.

De manière avantageuse, la portion taraudée ne s'étend pas au-delà de la hauteur de recouvrement par le dispositif de liaison sur l'ancrage.

Dans un mode de réalisation particulier, le dispositif de liaison et l'ancrage définissent un dispositif d'encliquetage configuré pour fixer le dispositif de liaison sur l'ancrage par déformation élastique.

L'invention a encore pour objet une reconstitution dentaire qui est plus simple à mettre en œuvre que les configurations de l'art antérieur.

On tend à atteindre ce résultat au moyen d'une reconstitution dentaire qui comporte un système de liaison selon l'une quelconque des configurations précédentes et qui comporte une prothèse possédant un trou traversant débouchant sur le trou traversant du dispositif de liaison, le trou traversant de la prothèse s'élargissant depuis son extrémité coronaire jusqu'à son extrémité apicale.

De manière avantageuse, la vis de fixation est dépourvue de contact avec la prothèse.

Préférentiellement, la prothèse est dépourvue de contact avec l'ancrage.

L'invention a également pour objet un procédé de réalisation d'une reconstitution dentaire qui est plus simple à mettre en œuvre que les configurations de l'art antérieur.

On tend à atteindre ce résultat au moyen d'un procédé de réalisation d'une reconstitution dentaire comportant les étapes suivantes :
- fournir un ancrage destiné à être fixé sur un os maxillaire d'un modèle de laboratoire, l'ancrage possédant un plot destiné à être monté saillant par rapport à la gencive, le plot définissant une portion taraudée s'étendant au moins partiellement hors de la gencive et de l'os maxillaire ;
- fournir un dispositif de liaison selon l'une quelconque des configurations précédentes ;
- fournir une prothèse définissant un trou traversant ;
- insérer le dispositif de liaison dans la prothèse puis poser l'ensemble sur le plot, le dispositif de liaison se trouvant entre le plot et la prothèse ;
- faire passer une vis de fixation à travers le trou traversant de la prothèse et le trou traversant du dispositif de liaison ;
- visser la vis de fixation dans la zone taraudée jusqu'à venir en appui de la butée, la vis de fixation fixant le dispositif de liaison sur le pilier ou l'implant et déformant le bloqueur pour que le bloqueur s'introduise dans une rainure ou un renfoncement de la prothèse pour monter fixement le dispositif de liaison et la prothèse selon la direction longitudinale ;
- retirer la vis de fixation et détacher l'ensemble dispositif de liaison et la prothèse de l'ancrage d'un modèle de laboratoire.

### Description des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1, illustre schématiquement une vue de côté d'une reconstruction implantaire selon un premier mode de réalisation ;
- la figure 2, illustre schématiquement une vue de côté opposé d'une reconstruction implantaire selon un deuxième mode de réalisation ;
- la figure 3, illustre schématiquement une vue éclatée d'une reconstruction implantaire dépourvue de prothèse dentaire ;
- la figure 4, illustre schématiquement une vue en coupe d'une reconstruction implantaire selon un troisième mode de réalisation ;
- la figure 5, illustre schématiquement une vue en coupe d'une reconstruction implantaire selon un quatrième mode de réalisation, directement sur un ancrage ;
- la figure 6, illustre schématiquement une vue en coupe de la partie sommitale d'une reconstruction implantaire selon un cinquième mode de réalisation ;
- la figure 7, illustre schématiquement une vue de côté d'un bloqueur ;
- la figure 8, illustre schématiquement une vue en coupe de la partie sommitale d'une reconstruction implantaire selon un sixième mode de réalisation ;
- la figure 9, illustre schématiquement une vue en coupe d'une reconstruction implantaire selon un septième mode de réalisation ;
- la figure 10, illustre schématiquement une vue de dessus d'un autre mode de réalisation d'un bloqueur monté sur un dispositif de liaison ;
- la figure 11, illustre schématiquement une vue en coupe de la partie sommitale d'une reconstruction implantaire selon un huitième mode de réalisation ;
- la figure 12, illustre schématiquement une vue en coupe de la partie périphérique d'une reconstruction implantaire ;
- la figure 13 illustre schématiquement une vue éclatée d'un autre mode de réalisation d'une reconstruction implantaire dépourvue de prothèse dentaire ;
- la figure 14a illustre schématiquement une vue en coupe d'une reconstruction implantaire selon un cinquième mode de réalisation, directement sur un ancrage ;
- la figure 14b illustre schématiquement une vue en coupe élargie de la connexion entre le pilier implantaire et le dispositif de liaison ;
- la figure 15 illustre schématiquement une vue de côté d'une reconstruction implantaire selon un sixième mode de réalisation ;
- les figures 16a, 16b et 16c illustre schématiquement et respectivement une vue de côté d'un dispositif de liaison, d'une reconstruction implantaire selon un sixième mode de réalisation et une vue de dessus du bloqueur ;
- la figure 17 illustre schématiquement une vue en coupe d'une reconstruction implantaire selon un septième mode de réalisation ;
- la figure 18 illustre schématiquement une vue en coupe d'une reconstruction implantaire selon un huitième mode de réalisation ;
- les figures 19a, 19b et 19c illustrent schématiquement une vue de côté et d'une reconstruction implantaire selon un septième mode de réalisation, des vues de dessus du bloqueur et des vues de côté du bloqueur dans la position d'extension et dans la position rétractée ;
- la figure 20 illustre schématiquement une vue en coupe d'une reconstruction implantaire selon un neuvième mode de réalisation ;
- la figure 21 illustre schématiquement une vue en coupe d'une reconstruction implantaire selon un dixième mode de réalisation ;
- la figure 22 illustre schématiquement une vue en coupe d'une étape de séparation entre la prothèse et le dispositif de liaison.

### Description détaillée

La reconstruction dentaire possède un ancrage 1 qui est muni au moins d'un implant 1a et préférentiellement d'un implant 1a et d'un pilier 1b. La reconstruction dentaire est également munie d'un dispositif de liaison 2 avec un corps, d'une prothèse dentaire 3 et d'une vis de fixation 4 également appelée vis de prothèse. La reconstruction dentaire est une reconstruction dentaire implantaire, c'est-à-dire une reconstruction dentaire qui est ancrée au moyen d'un ancrage 1 possédant au moins un implant 1a. La reconstruction dentaire est avantageusement une reconstruction implantaire pour dent unique, c'est-à-dire une couronne, ou pour plusieurs dents, c'est-à-dire un bridge. La reconstruction dentaire peut également être une coiffe de cicatrisation, une coiffe de recouvrement d'un implant dentaire (coping), un dispositif de transfert d'empreinte.

L'ancrage 1 est ancré fixement dans l'os des maxillaires et il déborde de l'os. L'ancrage 1 se termine par un plot 5 qui est saillant de l'os et de la gencive. Le plot 5 est convexe et en saillie de la gencive.

L'implant 1a est un implant dentaire destiné à être inséré dans l'os des maxillaires. L'implant 1a est disposé à raz de l'os. Une fois installé, l'implant 1a est inamovible de l'os des maxillaires (inférieur ou supérieur). L'implant 1a sert d'ancrage 1 à la reconstruction dentaire. L'implant 1a est préférentiellement en titane, en alliage de titane ou en céramique avantageusement en zircone. L'implant 1a possède préférentiellement une portion filetée externe 1a présente sur la paroi externe pour s'ancrer dans un os. L'implant 1a avec son plot 5 convexe et saillant peut être réalisé selon les configurations connues de l'homme du métier. **Il** est avantageux de réaliser le plot 5 en matériau métallique ou céramique (préférentiellement en zircone).

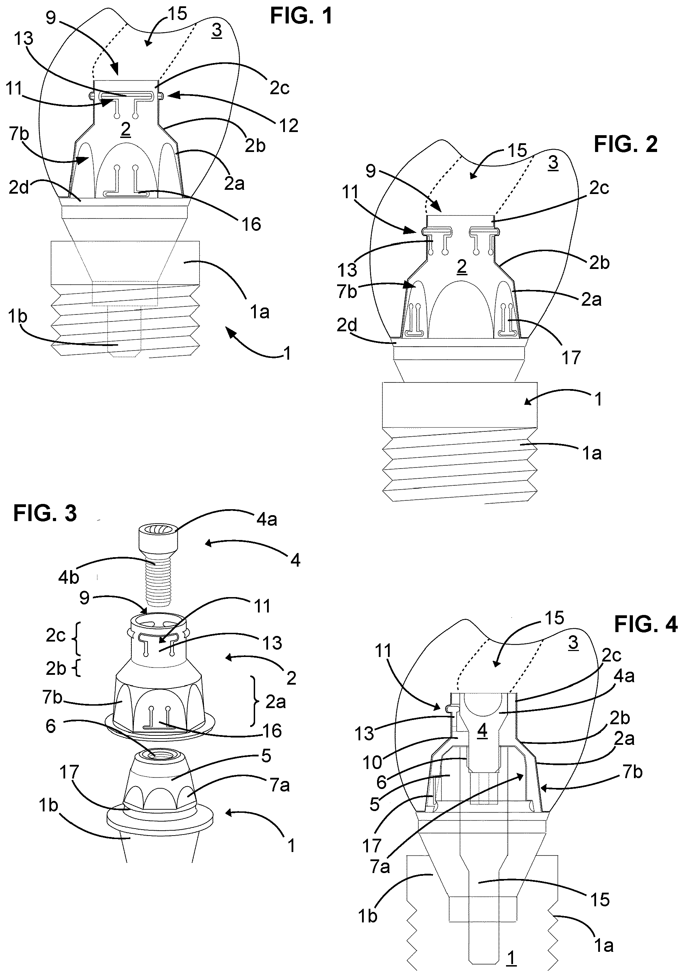

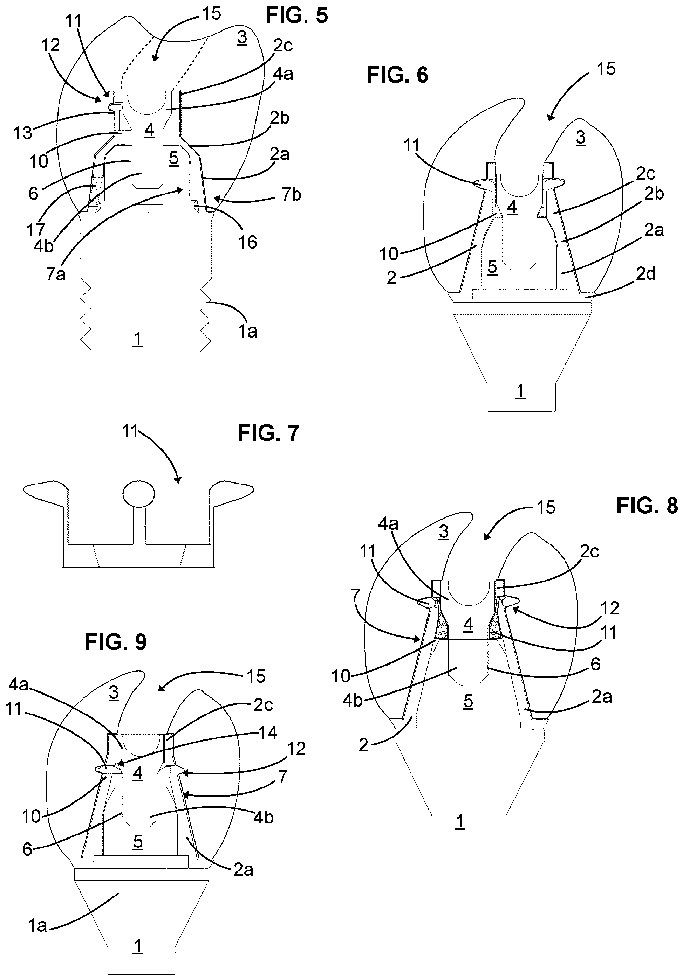

Dans un mode de réalisation, l'ancrage 1 possède un implant 1a et un pilier 1b démontable par rapport à l'implant 1a. Le pilier 1b possède un filetage externe qui s'insère dans un filetage interne de l'implant 1a. L'implant 1a ne fait pas saillie de la gencive et seul le plot 5 qui termine le pilier 1b fait saillie de la gencive. Dans une autre configuration, l'ancrage 1 est monobloc. L'implant 1a forme également le pilier 1b qui est alors inamovible. La figure 5 illustre un ancrage 1 monobloc alors que les figures 1, 2 et 4 illustrent un implant 1a avec un pilier 1b démontable. La figure 1 illustre un mode de réalisation particulier de fixation du pilier 1b dans l'implant 1a.

Comme illustré à la figure 3, l'ancrage 1 définit une portion taraudée 6 qui débouche du plot 5. La portion taraudée 6 est une portion avec un filetage interne qui est destiné à recevoir la vis de fixation 4 pour fixer le dispositif de liaison 2 sur l'ancrage 1. La vis de fixation 4 possède une tête 4a et une portion filetée 4b qui coopère avec la portion taraudée 6 pour fixer la prothèse dentaire 3 avec l'ancrage 1.

L'utilisation d'un ancrage 1 muni d'un plot 5 convexe en saillie permet de décaler la prise d'appui de la prothèse 3 par rapport à l'os ce qui réduit les risques d'infection. Le plot 5 est un élément convexe de faible hauteur et de faible section afin d'être installé sur l'ancrage 1a lors de la pose de celui-ci ou lors de la mise en évidence de l'ancrage 1a si celui-ci a été enfoui durant l'ostéo-intégration.

Cependant, une telle configuration de plot 5 rend particulièrement difficile l'installation directe de la prothèse 3. En effet, les écarts dimensionnels qui existent entre la paroi externe du plot 5 et la cavité de la prothèse 3 entraine la génération de contraintes importantes. En l'absence d'une fixation par collage, notamment par l'intermédiaire d'un pilier destiné à cet effet, il est courant d'aboutir à la fracture de la prothèse en céramique. Dans le cas d'une prothèse en métal, cela induit une usure prématurée de l'interface.

Il est donc particulièrement avantageux d'utiliser un dispositif de liaison 2 qui réalise la liaison mécanique entre la prothèse 3 et l'ancrage 1 et plus particulièrement entre la prothèse 3 et le plot 5. Le dispositif de liaison 2 est monté sur le plot 5. Le dispositif de liaison 2 est monté amovible par rapport à l'ancrage 1 ce qui facilite le réglage de la prothèse 3 par rapport aux autres dents et par rapport à l'ancrage 1.

Une fois l'ancrage 1 installé dans l'os maxillaire, le dispositif de liaison 2 peut être monté et démonté sans avoir à intervenir sur l'ancrage 1 ce qui évite une sollicitation excessive de l'ancrage 1 ainsi que sa contamination par de la colle.

Le dispositif de liaison 2 peut être réalisé en matériau métallique ou en matériau polymère ou encore partiellement en matériau métallique et partiellement en polymère. Le matériau métallique utilisé peut être du titane ou un alliage de titane. Pour la formation de l'élément de liaison 2, il est particulièrement avantageux d'utiliser un alliage à mémoire de forme, par exemple un alliage comportant majoritairement du Nickel et du Titane. Il est préférable d'utiliser un alliage à mémoire de forme dont la température de changement de phase est supérieure ou égale à 100°C. Le matériau polymère utilisé est préférentiellement choisi parmi le polyetherketoneketone (PEEK), le polyetherketoneketone (PEKK) ou leurs dérivés. D'autres matériaux possédant les performances mécaniques nécessaires et une biocompatibilité sont possibles. De manière générale, le ou les matériaux choisis pour former le dispositif de liaison 2 font que le dispositif de liaison est peu déformable sous une force en compression selon la direction longitudinale de la vis de fixation 4. Il est particulièrement avantageux de réaliser le dispositif de liaison 2 en matériau métallique et/ou en matériau polymère car cela permet une meilleure maitrise des dimensions du dispositif de liaison 2 et donc une meilleure maitrise de sa fixation sur l'ancrage 1 sur un plot 5 dont les dimensions sont également bien maitrisées. Le dispositif de liaison 2 n'est pas une pièce sur-mesure qui doit s'adapter à la configuration de la mâchoire ce qui permet de réaliser le dispositif de liaison avec le même contrôle dimensionnel que le plot 5. Cela assure une meilleure connexion mécanique entre le plot 5 et le dispositif de liaison 2 en comparaison de la connexion mécanique entre le plot 5 et la prothèse 3.

La paroi supérieure du plot 5 vient en appui avec une paroi interne de la cavité du dispositif de liaison 2. Il est avantageux que la face externe du plot 5 soit complémentaire ou aussi complémentaire que possible de la face interne de la cavité définie dans le dispositif de liaison 2 pour assurer une bonne reprise des forces de la mastication. Le dispositif de liaison 2 permet d'augmenter la surface de contact qui sert à la fixation de la prothèse 3 avec l'ancrage 1.

Pour faciliter l'installation du dispositif de liaison 2, il est particulièrement avantageux de prévoir un plot 5 qui est muni d'un paroi externe décroissante monotone depuis la zone de pied jusqu'à la zone sommitale du plot 5. La face externe du plot 5 présente une forme complémentaire à la forme de la face interne du dispositif de liaison 3. La face supérieure du plot 5 est destinée à venir en contact de la face supérieure de la cavité destinée à recevoir le plot 5.

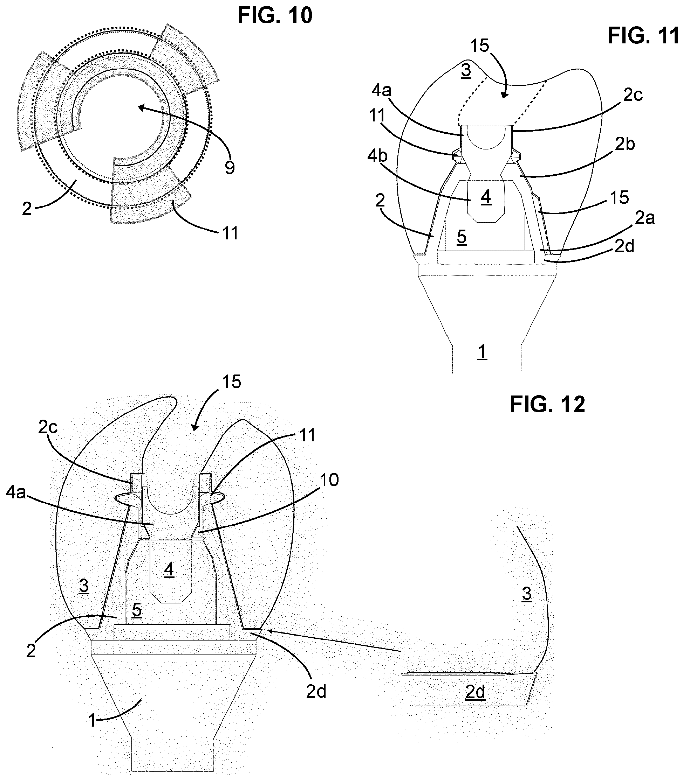

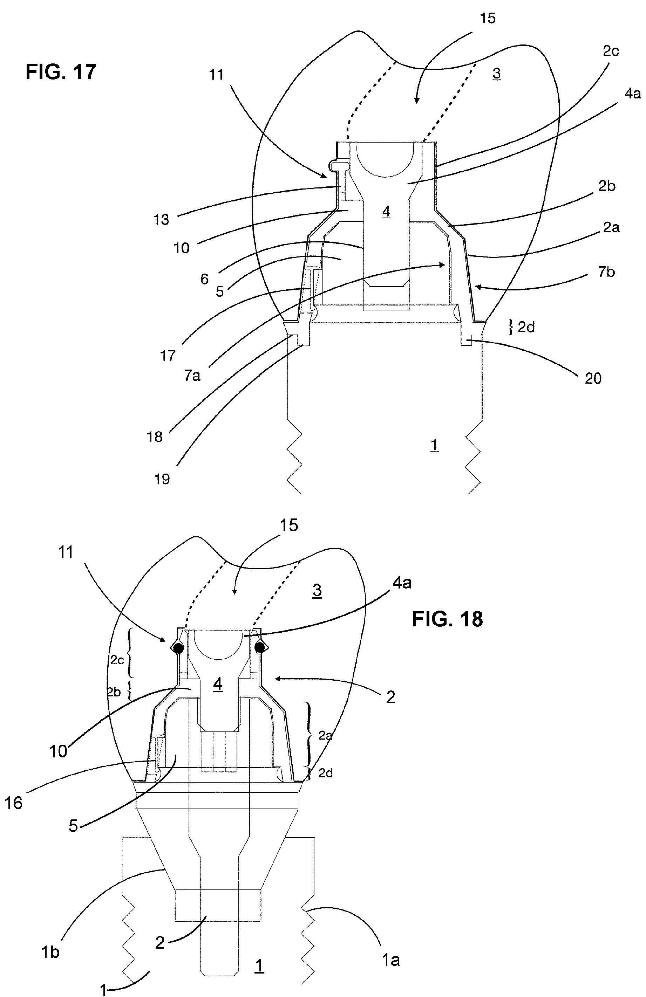

Un premier bloqueur de rotation 7a configuré pour bloquer la rotation entre le plot 5 et le dispositif de liaison 2 est préférentiellement présent pour empêcher la rotation du dispositif de liaison 2 par rapport au plot 5 et donc empêcher la rotation de la prothèse 3 par rapport à l'ancrage 1. La rotation est empêchée autour d'un axe parallèle à l'axe longitudinal de la vis de fixation 4. Le premier bloqueur de rotation 7a peut être formé par un polygone, de préférence un polygone convexe formé sur la paroi externe du plot 5 et une forme complémentaire formée par la cavité interne débouchante du dispositif de liaison 2. L'utilisation de deux formes complémentaires permet de bloquer la rotation et d'assurer un contact important qui favorise une reprise des forces mécaniques. D'autres configurations sont possibles. Dans les configurations illustrées aux figures 1 à 6, 8, 9 et 12 à 22, le dispositif anti-rotation est formé par un polygone convexe régulier, par exemple un hexagone. D'autres formes de polygones sont possibles ainsi que des polygones convexes non-réguliers voire des polygones non convexes. Il est également possible de fournir des formes quelconques qui empêchent la rotation. Pour empêcher la rotation, il est possible de former des rainures 8 et/ou des languettes dans le dispositif de liaison 2 qui s'insèrent ou reçoivent des languettes et/ou des rainures correspondantes de la prothèse dentaire 3 comme illustré à la figure 11.

Le corps du dispositif de liaison 2 définit un trou traversant 9 destiné à recevoir la vis de fixation 4. Le trou traversant 9 du dispositif de liaison 2 vient dans le prolongement de la portion taraudée 6 de l'ancrage 1.

Le dispositif de liaison 2 possède une butée 10. La butée 10 bloque une tête 4a de la vis de fixation 4 de manière à bloquer le dispositif de liaison 2 contre l'ancrage 1 et empêcher tout mouvement en translation selon la direction longitudinale de la vis de fixation 4. Le bloqueur de rotation 7a empêche la rotation du dispositif de liaison 2 autour de l'axe longitudinal de la vis de fixation 4 par rapport à l'ancrage 1. Lorsque la vis de fixation 4 appuie sur la butée 10, le dispositif de liaison 2 est monté immobile par rapport à l'ancrage 1. Les figures 4, 5 et 8 14a, 17, 18, 20 à 22 illustrent une butée 10 formée par le corps alors que les figures 6, 9, 11 et 12 illustrent une butée amovible du corps.

La prothèse dentaire 3 est fixée à l'ancrage 1 au moyen d'un bloqueur 11 relié au corps du dispositif de liaison 2. Le bloqueur 11 est configuré pour fixer la prothèse 3 au dispositif de liaison 2. Dans un mode de réalisation, la butée 10 est en contact direct avec la tête de vis 4a. Dans une alternative de réalisation, la tête de vis 4a est en appui sur le bloqueur 11 qui est lui-même en appui sur la butée 10 (figure 9).

Le dispositif de liaison 2 possède au moins un bloqueur 11 qui est configuré pour présenter une première position dite position rétractée et une deuxième position dite position étendue. Dans la position étendue, la section externe du bloqueur 11 est plus large que dans la position rétractée. Le bloqueur 11 peut être réalisé de différentes manières. Le bloqueur 11 peut être réalisé amovible ou indissociable du corps de l'élément de liaison 2.

De manière préférentielle, le bloqueur 11 possède une position de repos qui correspond à la position étendue. Lors de l'installation de la prothèse 3, le bloqueur 11 se déforme élastiquement entre la position étendue et la position rétractée jusqu'à ce que le bloqueur 11 pénètre un ou plusieurs renfoncements 12 de la prothèse 3 pour s'étendre de nouveau. Une fois la prothèse 3 installée autour du dispositif de liaison 2, le bloqueur 11 est préférentiellement dans la position de repos. La position de repos du bloqueur 11 est la position lorsque le bloqueur 11 n'est pas sollicité par la vis de fixation 4.

Le bloqueur 11 est destiné à s'insérer dans au moins un renfoncement 12 de la prothèse 3 recouvrant le dispositif de liaison 2 pour fixer la prothèse 3 sur l'élément de liaison 2. Le renfoncement 12 de la prothèse 3 peut être une rainure annulaire. La rainure annulaire évite la formation d'un dispositif anti-rotation entre la prothèse 3 et le bloqueur 11. En alternative, plusieurs renfoncements disjoints sont possibles.

Le passage de la première position à la deuxième position correspond à une expansion transversale en direction de la prothèse dentaire 3 de manière à venir en contact de la prothèse dentaire 3. Dans la position étendue, le bloqueur 11 réalise la fixation mécanique de la prothèse dentaire 3 sur l'élément de liaison 2 en s'introduisant dans le renfoncement 12. La prothèse dentaire 3 devient indissociable du dispositif de liaison 2. Le bloqueur 11 et le renfoncement 12 coopèrent pour fixer la prothèse dentaire 3 sur le dispositif de liaison 2 et donc sur l'ancrage 1. Dans la position étendue, le bloqueur 11 fixe la prothèse 3 sur le dispositif de liaison 2 et empêche une translation selon l'axe longitudinal de la vis de fixation 4.

Il est avantageux de former le au moins un renfoncement 12 dans la partie supérieure de la prothèse dentaire 3, c'est-à-dire dans une zone possédant une quantité importante de matière afin de réduire les risques de fracture de la prothèse dentaire 3. Dans les exemples de réalisation illustrés, le bloqueur 11 est disposé dans la zone de tête 2c du corps pour que le renfoncement 12 soit dans la portion supérieure de la prothèse 3, c'est-à-dire la zone éloignée de la zone de pied 2a du dispositif de liaison 2 pour ne pas trop fragiliser la prothèse dentaire 3.

De manière préférentielle, le bloqueur 11 obstrue partiellement le trou traversant 9 du dispositif de liaison 2. Le bloqueur 11 est préférentiellement déformé au moyen de la tête de vis 4a qui est introduite dans le trou traversant 9 du dispositif de liaison 2. La tête de vis 4a est plus large que la portion filetée 4b. Lorsque la tête de vis 4a est introduite dans le dispositif de liaison 2, la tête de vis 4a se déplace jusqu'à venir en appui sur le bloqueur 11. La tête de vis 4a applique un effort sur le bloqueur 11 qui s'étend vers l'extérieur et applique un effort ou un effort plus important sur la prothèse 3.

Dans un mode de réalisation particulier, la tête de vis 4a contraint le bloqueur 11 qui passe de la position rétractée à la position étendue par déformation. Lorsque la tête de vis 4a est contre une butée 10 du dispositif de liaison 2, le bloqueur 11 est dans la position étendue et reste dans la position étendue.

En utilisant un bloqueur 11 dont la position de repos permet de fixer ensemble la prothèse 3 et le dispositif de liaison 2, il est alors possible d'installer ou de retirer simultanément l'ensemble formé par la prothèse 3 et le dispositif de liaison 2 ce qui permet de réduire les manipulations et donc les risques de chute ou d'ingestion. Cela permet également d'éviter l'utilisation d'une couche de colle entre le dispositif de liaison 2 et la prothèse 3. Un résultat équivalent peut être obtenu lorsque la première installation de la vis de fixation 4 entraine la déformation plastique du bloqueur 11 ce qui a pour effet de fixer ensemble la prothèse 3 et le dispositif de liaison 2 même après le retrait de la vis de fixation 4.

De manière particulièrement avantageuse, la tête de vis 4a possède une section circulaire de diamètre constant sur au moins une partie de sa hauteur destinée à faire face au bloqueur 11 perpendiculairement à l'axe longitudinal de la vis de fixation 4. La section circulaire permet d'avoir un effort constant appliqué sur le bloqueur 11 et donc sur la prothèse indépendamment de la profondeur d'enfoncement de la vis de fixation 4 dans le dispositif de liaison et dans l'ancrage 1. Cela permet de dissocier l'effort appliqué entre le dispositif de liaison 2 et l'ancrage 1 et l'effort appliqué entre le bloqueur 11 et la prothèse 3.

Lorsque la vis de fixation 4 est contre la butée 10, c'est-à-dire que la vis de fixation 4 est fixée sur le plot 5, la tête de vis 4a forme un obstacle qui empêche le bloqueur 11 de se déformer vers la position rétractée, c'est-à-dire vers la position qui autorise la désolidarisation entre la prothèse 3 et le dispositif de liaison 2. La tête de vis 4a va claveter le bloqueur 11.

Dans un mode de réalisation illustré aux figures 1 à 5, 14a, 17, 21, 22, le bloqueur 11 peut être formé par une ou plusieurs ailettes 13 qui sont découpées dans la paroi latérale du corps du dispositif de liaison 2. La ou les ailettes 13 sont formées par une découpe de la paroi latérale.

De manière préférentielle, plusieurs ailettes 13 sont montées sur la paroi latérale du corps du dispositif de liaison 2. Avantageusement, les ailettes 13 sont uniformément réparties sur le pourtour du corps du dispositif de liaison 2. Selon les configurations, les ailettes 13 sont montées pour déformer l'extrémité supérieure ou l'extrémité inférieure de l'ailette 13 lors de la sollicitation de la tête de vis 4a pour les déplacer vers la position étendue. Les ailettes 13 peuvent se déplacer autour d'un axe de rotation qui est perpendiculaire à l'axe longitudinal de la vis de fixation 4. Il est également possible de prévoir que les ailettes 13 se déplacent autour d'un axe qui est parallèle à l'axe longitudinal de la vis de fixation 4.

La forme des ailettes 13 peut être quelconque. Il est avantageux que la partie mobile des ailettes 13 soit munie d'une portion saillante qui s'insère dans le au moins un renfoncement, par exemple une rainure 12 de la prothèse dentaire 3 de manière à réduire l'étendue de la rainure/renfoncement selon l'axe longitudinal de la vis de fixation 4. La forme de la portion saillante peut être quelconque, par exemple plate, arrondie ou pointue. De manière préférentielle, les ailettes 13 sont formées dans la moitié supérieure du dispositif de liaison 2. Il est avantageux de former les ailettes 13 dans la portion circulaire supérieure du corps du dispositif de liaison 2, c'est-à-dire la zone de tête 2c.

Dans une alternative de réalisation illustrée aux figures 6 à 12, 16b, 18, 19a et 20 le bloqueur 11 est une pièce amovible par rapport au corps du dispositif de liaison 2. Le bloqueur 11 peut se présenter sous la forme d'un anneau, d'un élément en forme de « C ». Le bloqueur 11 passe à travers une ou plusieurs lumières 14 du corps du dispositif de liaison 2. Le bloqueur 11 peut être un élément en forme de « C » qui fait partiellement le tour du corps. Le bloqueur 11 possède une position de repos dans laquelle il obstrue partiellement le trou traversant 9 du dispositif de liaison 2. L'introduction de la vis de fixation 4 dans le dispositif de liaison 2 appuie sur le bloqueur 11 qui se déplace dans le au moins un renfoncement 12, par exemple la rainure ou les trous pour s'étendre au-delà de la paroi latérale externe. Le déplacement est transversal ou radial.

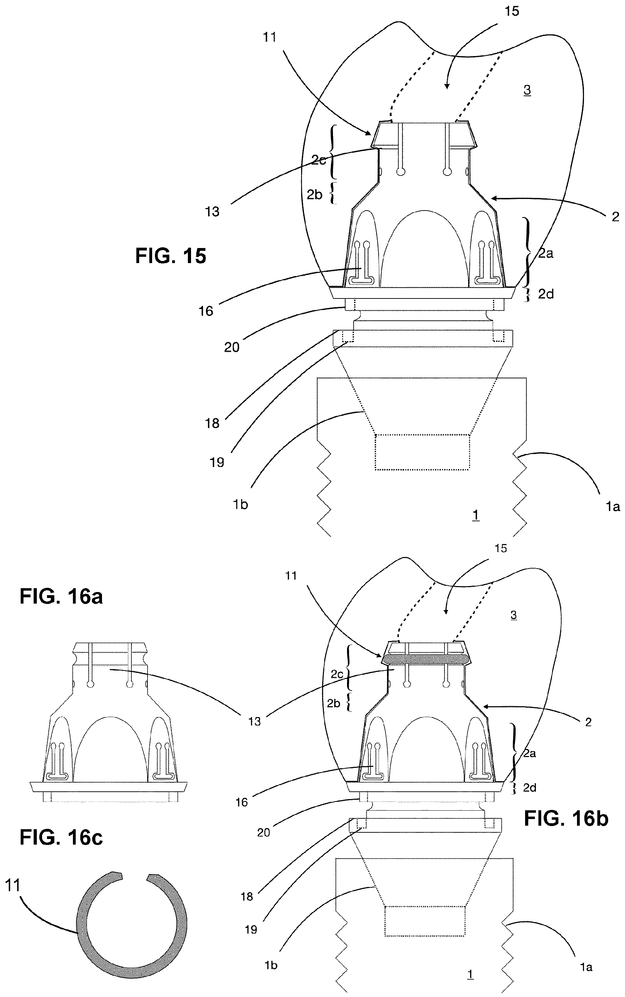

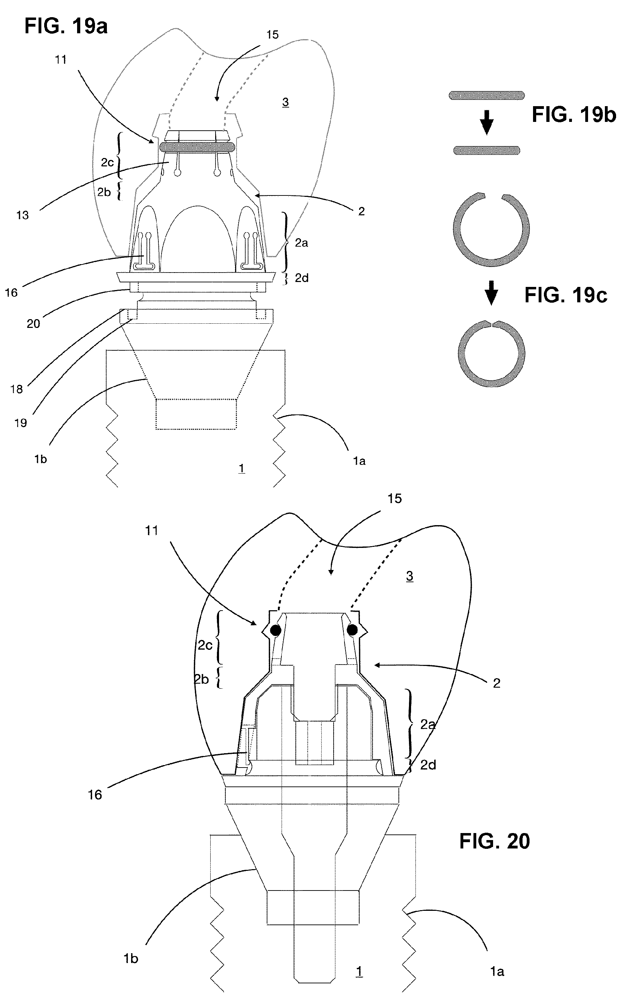

Dans un autre mode de réalisation illustré aux figures 16a, 16b, 18 et 19a et 20, le bloqueur 11 possède un élément de rétention de préférence une pièce amovible sous la forme d'un anneau et préférentiellement sous la forme d'un « C » comme cela est illustré aux figures 16c, 19b et 19c. La zone de tête 2c du dispositif de liaison 2 présente une gorge annulaire destinée à recevoir la pièce amovible du bloqueur 11. La gorge annulaire s'étend sur le pourtour du dispositif de liaison et chevauche les ailettes 13. La déformation des ailettes 13 vers l'extérieur déforme la pièce amovible qui empêche le démontage de la prothèse 3. Il est avantageux que le bloqueur 11 travaille dans la zone de déformation élastique et qu'en l'absence de vis de fixation 4, le bloqueur 11 contraint les ailettes 13 dans la position rétractée pour faciliter l'insertion de la prothèse 3. Lorsque la tête de vis 4a est en appui sur la butée 10, elle applique un effort sur les ailettes 13 ce qui déforme le bloqueur 11et applique un effort sur la rainure 12 de la prothèse 3 et qui empêche la désolidarisation entre la prothèse 3 et le dispositif de liaison 2 même durant les efforts de mastication. Dans un mode de réalisation préférentiel, le bloqueur 11 est en alliage à mémoire de forme, par exemple en NiTi. Les alliages à mémoire de forme sont difficiles à usiner et les soudures sont délicates à réaliser. Il est avantageux de former un bloqueur 11 de forme simple pour faciliter la réalisation tout en profitant des mêmes avantages qu'un dispositif de liaison 2 réalisé intégralement en alliage à mémoire de forme ou dont les ailettes 13 sont en alliages à mémoire de forme. Il est avantageux d'utiliser un bloqueur 11 en alliage à mémoire de forme qui assure la fixation de la prothèse 3 avec le dispositif de liaison 2 en l'absence de sollicitation extérieure, par exemple après sa déformation plastique par la première introduction de la vis de fixation 4 dans le dispositif de liaison 2. Lorsque le dispositif de liaison 2, le bloqueur 11 et la prothèse 3 sont chauffés au-delà de la température de transformation du matériau à mémoire de forme, le bloqueur 11 retrouve sa configuration qui désolidarise la prothèse 3 et le dispositif de liaison 2.

Les figures 19b et 19c illustrent en vue de côté et en vue de dessus la déformation du bloqueur en forme de « C » entre la position étendue et la position rétractée. La figure 19a, illustre le bloqueur en forme de C dans la position rétractée avec la prothèse 3 qui appuie sur le bloqueur 11.

Les figures 6 et 7 illustrent un mode de réalisation dans lequel la tête de vis 4a vient en appui sur le bloqueur 11 et plaque ce dernier contre la butée 10 lorsqu'il étend une partie du bloqueur 11 en direction de la prothèse dentaire 3.

La figure 8 illustre un mode de réalisation où le bloqueur 11 est réalisé en deux parties. Une première partie obstrue partiellement le trou traversant 9 et forme des bras qui viennent en appui sur une deuxième partie qui traverse le au moins un renfoncement 12, par exemple la rainure 12 ou les trous du corps. Lorsque la tête de vis 4a plaque la première partie contre la butée 10, les bras appuient sur la deuxième partie qui s'introduit dans la prothèse 3 pour rendre la prothèse dentaire 3 indissociable du dispositif de liaison 2.

Les figures 9 et 10 illustrent un mode de réalisation où le bloqueur 11 est un anneau posé sur la butée 10 du dispositif de liaison 2. La tête de vis 4a appuie sur le bloqueur 11 en direction de la butée 10 et le bloqueur 11 se déforme en direction du au moins un renfoncement 12, par exemple de la rainure 12 de la prothèse dentaire 3 pour la rendre indissociable du dispositif de liaison 2.

Le bloqueur 11 est destiné à s'insérer dans le au moins un renfoncement 12 tel qu'une rainure 12 dans la cavité interne de la prothèse dentaire 3. Le bloqueur 11 applique une force transversale ou radiale sur la prothèse dentaire 3 ce qui maintient fixement la prothèse dentaire 3 sur le dispositif de liaison 2. Le bloqueur 11 est monté réversible de sorte que le bloqueur 11 permet de monter fixement la prothèse dentaire 3 et le dispositif de liaison 2 et qu'il autorise un mouvement inverse depuis la position étendue jusqu'à la position rétractée pour permettre de désolidariser la prothèse dentaire 3 et le dispositif de liaison 2.

Ainsi, en retirant la vis de fixation 4, on élimine la fixation mécanique introduite par le bloqueur 11 et il est possible de retirer la prothèse 3 sans intervenir sur l'ancrage 1 et notamment sans solliciter l'ancrage 1 en rotation.

L'utilisation du dispositif de liaison 2 comme élément intermédiaire pour fixer une prothèse 3 sur un ancrage 1 est particulièrement avantageuse. Comme indiqué plus haut, pour faciliter son installation, l'ancrage 1 possède un plot 5 de faible dimension ce qui tend à générer des forces importantes sur la prothèse 3 et donc incite à utiliser des ancrages creux pour réaliser la fixation de la prothèse au moyen d'une vis de pilier qui est longue et large. Lorsqu'un pilier spécifique recevant par collage la prothèse 3 est utilisé, cela engendre les problèmes précités par la colle.

L'utilisation d'un dispositif de liaison 2 permet de fournir une surface de contact plus importante avec la prothèse 3 ce qui réduit les efforts à l'interface entre avec la prothèse 3. Cela permet notamment de réduire l'usure de la paroi interne ou les risques de fracture de la prothèse 3 lorsque cette dernière est en céramique.

Il est particulièrement avantageux de prévoir que le dispositif de liaison 2 présente une section externe qui possède une décroissance monotone depuis la zone de pied 2a jusqu'à la zone de tête 2c. La zone de pied 2a vient en contact de l'ancrage 1. La zone de tête 2c correspond à l'extrémité opposée et se trouve proche du sommet de la prothèse 3. La décroissance monotone est observée sans tenir compte du bloqueur 11. Une telle configuration associée à une forme complémentaire dans la cavité interne de la prothèse 3 permet de former une prothèse 3 avec une épaisseur de matière dans la prothèse dentaire qui est plus importante dans son sommet que dans son pied. Il est alors plus facile pour la prothèse 3 de résister aux contraintes de mastication, préférentiellement au moins deux fois plus importante. La décroissance de la section externe du dispositif de liaison 2 permet de réduire la section du trou traversant dans la partie supérieure de la prothèse 3 ce qui a pour effet d'augmenter sa tenue mécanique.

La prothèse dentaire 3 peut être réalisée dans différents matériaux, par exemple une céramique, un matériau polymère ou un alliage métallique. La prothèse dentaire 3 peut reproduire la forme d'une dent ou d'une pluralité de dents. La prothèse dentaire 3 peut être recouverte par un matériau cosmétique ou comporter un matériau cosmétique. La prothèse dentaire 3 définit un trou traversant 15 qui s'étend selon une direction longitudinale. Le trou traversant 15 s'étend de l'extrémité coronaire et l'extrémité apicale de la prothèse dentaire 3. L'extrémité coronaire est destinée à venir en contact d'une dent opposée alors que l'extrémité apicale est destinée à venir en contact du dispositif de liaison 2 et/ou éventuellement de l'implant 1a. La prothèse dentaire 3 étant réalisée sur mesure pour remplacer une ou plusieurs dents, ses dimensions sont moins bien maitrisées que celles du dispositif de liaison 2 et du plot 5. Il est donc particulièrement avantageux d'utiliser un dispositif de liaison 2 en matériau métallique pour réaliser la fixation sur l'ancrage 1 et décaler la fixation de la prothèse dentaire 3. Une telle configuration permet de réduire les risques d'infection qui apparaissent lorsque la prothèse dentaire 3 ne s'adapte pas parfaitement sur la tête de l'ancrage 1.

La forme extérieure du dispositif de liaison 2 et la forme de la cavité de la prothèse 3 sont les plus complémentaires possible afin de fournir un bon transfert des efforts entre la prothèse 3 et l'ancrage 1. La cavité vient en appui sur le dispositif de liaison 2. Dans un mode de réalisation particulier, la prothèse 3 est dépourvue de contact avec l'ancrage 1. De manière avantageuse, la face sommitale du dispositif de liaison 2 est recouverte par la prothèse dentaire 3 de sorte que la prothèse dentaire 3 prenne appui sur cette portion du dispositif de liaison 2 et reprenne une partie des efforts selon la direction longitudinale de la vis de fixation 4.

Une fois la prothèse 3 montée sur le dispositif de liaison 2, le trou traversant 15 vient dans le prolongement du trou traversant 9. La prothèse dentaire 3 est installée sur le dispositif de liaison 2 par la partie apicale, c'est-à-dire par le haut ce qui facilite l'installation de la prothèse dentaire 3.

La vis de fixation 4 est introduite par le sommet de la prothèse 3. La vis de fixation 4 traverse le trou traversant 15 pour atteindre le trou traversant 9 et la butée 10. De manière privilégiée, le trou traversant 15 de la prothèse 3 possède une section qui autorise le passage complet de la vis de fixation 4. La vis de fixation 4 peut traverser librement le trou traversant 15. Le trou traversant 15 possède une section minimale qui est plus large que la section maximale de la vis de fixation 4. En d'autres termes, le trou traversant 15 autorise le passage complet de la vis de fixation 4 à travers la prothèse dentaire 3. L'extrémité apicale du trou traversant 15 s'évase de manière à définir une cavité qui reçoit le dispositif de liaison 2. La cavité destinée à recevoir le dispositif de liaison 2 possède une section qui est décroissante depuis son extrémité inférieure jusqu'à son extrémité supérieure.

Le dispositif de liaison 2 réalise la liaison mécanique entre le plot 5 et la prothèse 3. Le dispositif de liaison s'étend au-delà du plot 5 selon la direction longitudinale de manière à avoir une plus grande surface de contact entre la prothèse 3 que la surface de contact entre le plot 5 et le dispositif de liaison 2. Le dispositif de liaison 2 définit une cavité interne destinée à recevoir le plot 5 de l'ancrage, la cavité s'étend depuis la zone piédestal du dispositif de liaison, c'est-à-dire la zone destinée à venir en contact de l'ancrage tout autour du plot 5, vers le trou traversant destiné à recevoir la vis de fixation 4. La cavité possède une section décroissante depuis la zone piédestal jusqu'à la face sommitale définissant le trou de passage de la vis de fixation 4. De préférence, la section est continument décroissante. La cavité est disposée entre la butée 10 et la zone piédestal ce qui facilite l'obtention d'une configuration compacte et permettant une meilleure reprise des efforts. La prothèse 3 prend appui sur la face externe du dispositif de liaison 2 et la face interne du dispositif de liaison 2 prend appui sur le plot 5. La prothèse 3 et le plot 5 sont en vis-à-vis sur la face externe et la face interne du dispositif de liaison 2 selon un plan de coupe perpendiculaire à l'axe longitudinal du trou traversant qui est l'axe longitudinal de la vis de fixation 4. Le montage en vis-à-vis permet d'avoir une meilleure reprise des efforts entre la prothèse 3 et le plot 5. Lorsque la vis de fixation 4 est installée, la vis de fixation 4, le plot 5, le dispositif de liaison 2 et la prothèse 3 appartiennent à un même plan perpendiculaire à l'axe longitudinal de la vis de fixation 4.

Le trou traversant 15 de la prothèse 3 peut être incurvé ou désaxé de celui du trou traversant 9 du dispositif de liaison 2.

Le dispositif de liaison 2 ne recouvre qu'une partie de la paroi interne qui définit le trou traversant 15. Le recouvrement est observé selon une direction perpendiculaire à l'axe longitudinal de la vis de fixation 4. L'extrémité coronaire du trou traversant 15 n'est pas recouverte par le dispositif de liaison 2.

La portion taraudée 6 est disposée au-delà du plan terminal de la gencive, c'est-à-dire au-delà du plan terminal supérieur pour la mâchoire inférieure et le plan terminal inférieur pour la mâchoire supérieure.

Le dispositif de liaison 2 possède une forme simple ce qui permet une réalisation avec une haute précision dimensionnelle, par exemple par usinage. La précision de réalisation étant élevée, les dimensions sont bien maitrisées ce qui permet la formation d'une liaison mécanique précise avec l'ancrage 1 pour une bonne transmission des forces. De manière avantageuse, le dispositif de liaison 2 est formé exclusivement par une ou plusieurs sections circulaires et/ou une ou plusieurs sections tronconiques. Il est avantageux d'avoir une portion tronconique du plot 5 et une portion tronconique complémentaire sur la face interne du corps pour avec une bonne transmission des efforts selon la direction longitudinale du trou traversant 9.

Dans le mode de réalisation illustré aux figures 1 à 6, 8, 9,11, 13 à 22, le dispositif de liaison 2 est décomposé en une pluralité de portions distinctes montées successivement selon la direction longitudinale du dispositif de liaison 2. Dans le mode de réalisation illustré aux figures 1 à 5, le dispositif de liaison 2 comporte successivement depuis l'extrémité inférieure jusqu'à l'extrémité supérieure trois zones ou au moins trois zones. On trouve une zone de pied 2a de forme tronconique qui est suivie par une zone d'étranglement 2b également de forme tronconique et par une zone de tête 2c de forme circulaire. Les deux zones tronconiques se rétrécissent de leur portion inférieure jusqu'à leur portion supérieure. Le rétrécissement de section introduit par la zone d'étranglement 3b est plus important que celui introduit par la zone de pied 2a. La zone d'étranglement 2b assure un appui de la prothèse dentaire 3 pour une bonne transmission des forces mécaniques entre la prothèse dentaire 3 et le dispositif de liaison 2. La zone de tête 2c est circulaire et son sommet est recouvert par la prothèse 3 pour une meilleure reprise des efforts.

Dans une alternative de réalisation illustrée aux figures 6, 8 et 9, le dispositif de liaison 2 possède une zone de pied 2a tronconique suivie par une zone de tête 2c circulaire. La prothèse dentaire 3 définit au moins un renfoncement sous la forme d'une rainure 12 destinée à recevoir un bloqueur 11 sous la forme d'un anneau ou d'un « C » tel que celui illustré à la figure 7 ou à la figure 10. Dans un cas de figure, une fente recevant le bloqueur 11 sépare la zone de pied 2a et la zone de tête 2c. Dans un autre cas de figure, la fente se situe dans la zone de pied 2a et la zone de pied 2a se prolonge, après la fente jusqu'à la zone de tête 2c.

Dans une alternative de réalisation non illustrée, le dispositif de liaison 2 possède une zone de pied 2a tronconique suivie par une zone de tête 2c tronconique. La zone de tête 2c possède une inclinaison plus marquée que la zone de pied 2a. L'inclinaison est l'angle qui existe entre la paroi latérale externe et l'axe longitudinal du centre du trou destiné à recevoir la vis de fixation 4.

La figure 11 illustre un dispositif de liaison 2 avec trois zones consécutives comme cela des figures 1 à 4 et une fente recevant le bloqueur 11 qui se trouve entre la zone d'étranglement 2b et la zone de tête 2c.

De manière privilégiée, la tête de vis 4a est à section circulaire et non tronconique dans sa portion destinée à venir en contact du bloqueur 11. La section circulaire s'enfonce dans le corps du dispositif de liaison 2. Avec une section circulaire, la déformation du bloqueur 11 est constante indépendamment de l'enfoncement de la tête de vis 4a. Le diamètre de la tête de vis 4a permet de définir la déformation et donc la force de retenue appliquée par le bloqueur 11 sur la prothèse 3. L'intensité de l'appui de la tête de vis 4a sur la butée 10 définit la force de maintien du dispositif de liaison 2 sur l'ancrage 1 et dont en partie la force de maintien de la prothèse 3 sur l'ancrage 1. Cette configuration permet de mieux maitriser les forces de fixation appliquées sur la prothèse 3 et donc de réduire les risques de rupture de la prothèse, notamment des prothèses 3 en céramiques. Cette configuration permet de limiter la sollicitation mécanique de la prothèse dentaire 3 selon la direction longitudinale à partir de la vis de fixation 4. La configuration illustrée est plus avantageuse que celle présentée dans le document KR 10-1943437 ou US2020/0015940.

L'augmentation de la surface de contact avec la prothèse 3 au moyen du dispositif de liaison 2 permet de réduire les contraintes appliquées sur la prothèse pour empêcher ses déplacements par rapport à l'ancrage 1. Les efforts étant moins importants, il est possible d'utiliser une vis de fixation moins large et/ou plus courte. En utilisant une vis de fixation moins large, cela permet de réduire la section du trou traversant 15 à travers la prothèse 3. Il y a alors plus de matière disponible au moins dans la partie sommitale de la prothèse 3 ce qui permet une meilleure résistance mécanique et plus esthétique.

L'utilisation d'une vis 4 plus courte permet de réaliser plus facilement un trou traversant 15 incurvé. Il est alors plus facile de définir la position de l'extrémité sommitale du trou traversant 15 pour faciliter l'introduction de la vis de fixation 4 et/ou rendre le trou traversant 15 moins visible.

L'utilisation d'une vis de fixation 4 plus courte permet également de réduire la profondeur de la portion taraudée 6 dans l'ancrage 1. Cela est particulièrement avantageux lorsque l'ancrage 1 possède un pilier 1b car cela permet de réduire la hauteur du pilier. La portion taraudée 6, peut s'étendre jusqu'à moins de la moitié de la hauteur de l'implant, préférentiellement uniquement dans le tiers supérieur de l'implant et encore plus préférentiellement uniquement dans la portion située au-delà de l'os maxillaire. Il est avantageux que la portion taraudée soit uniquement située dans le plot 5 et/ou ne s'étende pas au-delà du dispositif de liaison 2.

L'utilisation d'une vis de fixation 4 plus courte et/ou moins large permet d'utiliser plus facilement une section taraudée 6 qui est désaxée par rapport à l'axe d'insertion de l'implant 1a. Il est avantageux d'utiliser des pilier angulés transvissés pour prothèses vissées. Pour faciliter l'installation et la fixation de la prothèse 3, il est connu de fixer la prothèse au moyen d'une vis qui est inclinée par rapport à l'axe d'enfoncement d'un implant par l'intermédiaire des piliers angulés. L'utilisation d'un dispositif de liaison 2 qui améliore le contact avec la prothèse 3 permet de réduire les contraintes dimensionnelles sur les vis de fixation et donc d'augmenter la gamme d'angulation accessible. Il est possible de former une portion taraudée 6 dont l'axe longitudinal est incliné à au moins 15° par rapport à l'axe longitudinal de l'implant, de préférence au moins 20°, voire au moins 30°.

De manière privilégiée, la prothèse dentaire 3 définit le au moins un renfoncement 12 sous la forme d'une rainure annulaire de manière à recevoir le bloqueur 11 dans la position étendue sans former un dispositif anti-rotation. En alternative, la prothèse dentaire 3 définit une pluralité de renfoncements destinés à recevoir des zones saillantes du bloqueur 11, par exemple les ailettes 13.

Il est avantageux de dissocier la fonction de retenu de la prothèse 3 selon la direction longitudinale et la fonction d'anti-rotation entre la prothèse 3 et le dispositif de liaison 2. Un deuxième bloqueur de rotation 7b est utilisé entre le corps et la prothèse 3. Le dispositif de liaison 2 permettant d'augmenter la surface de contact avec la prothèse 3, les contraintes dimensionnelles sur le deuxième bloqueur de rotation 7b sont diminuées. Le deuxième bloqueur de rotation 7b configuré pour bloquer la rotation de la prothèse 3 par rapport au dispositif de liaison 2, également appelé deuxième dispositif anti-rotation, peut être formé par un polygone sur la paroi externe du dispositif de liaison 2 et une forme complémentaire dans la cavité de la prothèse dentaire 3. La rotation est empêchée autour d'un axe parallèle à l'axe longitudinal de la vis de fixation 4. D'autres configurations sont possibles. L'installation du bloqueur de rotation 7b dans la partie basse du dispositif de liaison place le bloqueur de rotation 7b dans la zone de pied de la prothèse 3 ce qui la rend plus efficace car la section disponible est augmentée.

Il est particulièrement avantageux d'avoir un dispositif d'antirotation 7b qui est formé sur la paroi externe du dispositif de liaison 2 car cela permet d'avoir une surface utilisable important ce qui facilite la reprise des efforts entre la prothèse 3 et le dispositif de liaison 2 car les dimensions de la prothèse 3 sont moins bien maitrisées que pour le plot 5. Il est particulièrement avantageux d'avoir un dispositif d'antirotation 7b qui est disposé entre la butée 10 et la zone de piédestal du dispositif de liaison 2 car la section disponible de corps est importante ce qui facilite le transfert des efforts entre la prothèse 3 et le dispositif de liaison 2 pour empêcher la rotation de la prothèse 3. Préférentiellement, le dispositif d'antirotation 7b s'étend sur moins 50% de la hauteur de la cavité. Avantageusement, le dispositif d'antirotation 7b s'étend à partir du pied du corps. Il est particulièrement intéressant de prévoir que le dispositif d'antirotation 7b soit formé par un polygone régulier sur la face externe du corps.

De manière particulièrement avantageuse, le premier dispositif anti-rotation 7a et le deuxième dispositif anti-rotation 7b appartiennent à un même plan perpendiculaire à l'axe longitudinal de la vis de fixation 4. Le premier dispositif anti-rotation entoure le deuxième dispositif anti-rotation ce qui est favorable. Le premier dispositif anti-rotation peut avoir une forme identique ou différente du deuxième dispositif anti-rotation. Il est avantageux d'avoir deux bloqueurs de rotation avec des formes identiques. Les figures 1 à 5 illustrent des premier et deuxième bloqueurs de rotation 7a et 7b sous la forme de polygones convexes réguliers alors que la figure 11 illustre la formation d'une languette 15 et d'une rainure s'étendant selon la direction longitudinale.

Dans le cas où la prothèse dentaire 3 forme plusieurs dents, il est préférable-de ne pas utiliser le bloqueur de rotation 7a entre le dispositif de liaison 2 et les multiples ancrages 1 pour faciliter l'insertion de la prothèse dentaire plurale (bridge). La prothèse 3 est fixée à l'os maxillaire au moyen de plusieurs ancrages 1 qui sont surmontés par un dispositif de liaison 2 et une vis de fixation 4.

Dans un mode de réalisation préférentiel, la face externe du dispositif de liaison 2 en contact avec la face interne de la cavité aménagée dans la prothèse 3 est recouverte par une couche de recouvrement réalisée dans un matériau polymère. La couche de recouvrement, également appelée enrobage, forme un joint qui assure l'étanchéité entre le dispositif de liaison 2 et la prothèse 3. En alternative ou en complément, la couche de recouvrement est formée sur la paroi externe du plot 5 pour former un joint entre le plot 5 et la prothèse 3.

De manière privilégiée, la couche de polymère possède une épaisseur comprise entre 15µm et 150µm, de préférence entre 75µm et 100µm, plus préférentiellement entre 50µm et 100µm. De manière préférentielle, la couche de recouvrement est constituée par ou comporte du Polytétrafluoroéthylène (PTFE), du polyetherketoneketone (PEEK), du polyetherketoneketone (PEKK) ou leurs dérivés, par exemple leurs dérivés fluorés. Ces matériaux sont particulièrement avantageux car ils sont compatibles avec le titane, les alliages de titane ainsi que les matériaux à mémoire de forme, par exemple le Nitinol. D'autres matériaux possédant une biocompatibilité peuvent être utilisés pour cet enrobage. Il est également possible d'utiliser des polymères polycathioniques hydrophobiques, par exemple ceux divulgués dans le document US10,500,317. L'utilisation d'une couche de recouvrement hydrophobique permet de ne pas favoriser la formation d'un biofilm sur l'ancrage 1 et notamment le plot 5 et/ou le dispositif de liaison 2.

La couche de recouvrement peut recouvrir la portion verticale du dispositif de liaison 2 et/ou de la portion saillante de l'ancrage 1 pour améliorer le maintien mécanique.

Dans un mode de réalisation particulier, la couche de recouvrement est colorée de manière à présenter une couleur blanche se rapprochant de la dent ou une couleur rose se rapprochant de la gencive. La coloration de la couche de recouvrement permet de masquer la couleur du matériau métallique formant le dispositif de liaison 2 et/ou l'ancrage 1 au travers de la prothèse dentaire 3 par transparence.

Il est particulièrement avantageux de prévoir que la face externe du dispositif de liaison 2 soit recouverte par une couche de recouvrement et de préférence par une couche de recouvrement ayant une épaisseur comprise entre 30µm et 75µm.

L'épaisseur de la couche de recouvrement peut être uniforme, mais il est avantageux de prévoir une épaisseur plus importante sur les ailettes 13 et les éléments expansifs 11.

De manière préférentielle, le dispositif de liaison 2 est muni d'un trottoir périphérique 2d qui forme l'extrémité inférieure du dispositif de liaison et qui est destiné à supporter l'extrémité inférieure périphérique de la prothèse dentaire 3. Le trottoir périphérique 2d peut également être recouvert par une couche de recouvrement ayant une épaisseur supérieure à l'épaisseur moyenne de la couche de recouvrement, par exemple au moins 10% supérieur. Préférentiellement, le trottoir périphérique 2d prend appui sur l'ancrage 1. De préférence, le trottoir périphérique 2d est uniquement ou au moins recouvert sur sa partie supérieure par la couche de recouvrement.

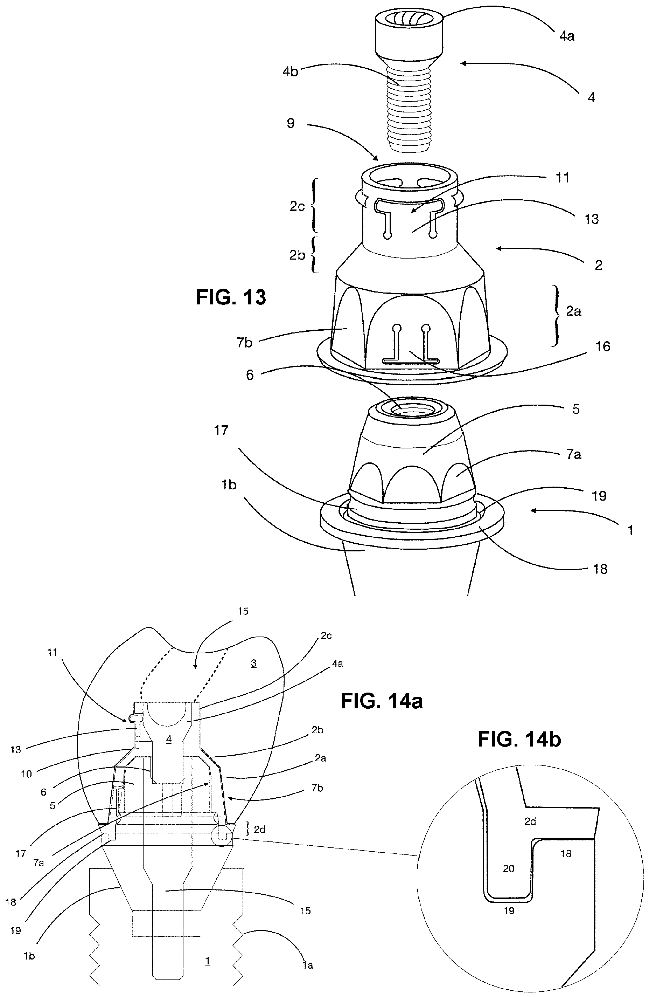

De manière préférentielle, dans un mode de réalisation illustré aux figures 13, 14 et 14b, l'ancrage 1 possède un pilier implantaire avec un épaulement périphérique 18 qui est destiné à recevoir le trottoir périphérique du dispositif de liaison 2 pour que le dispositif de liaison 2 prenne appui sur l'ancrage 1. La prise d'appui se fait de manière à reprendre des efforts selon la direction longitudinale de la vis de fixation 4.

Il est avantageux que l'épaulement périphérique 18 définisse une gorge annulaire 19. La zone de pied 2a du dispositif de liaison 2 possède une portion saillante 20 qui s'insère dans la gorge annulaire 19. Préférentiellement, l'épaulement périphérique 18 s'étend vers l'extérieur à partir de la gorge annulaire 20 pour permettre l'appui du dispositif de liaison autour de la gorge annulaire. L'introduction de la portion saillante 20 dans la gorge annulaire 19 permet de mieux maintenir en position le dispositif de liaison 2 par rapport à l'ancrage 1. Cela permet une meilleure reprise des efforts et notamment des contraintes latérales. Cela permet de réduire la transmission des efforts latéraux sur la vis de fixation 4 ce qui permet de réduire les risques de dévissage. La portion saillante peut être une portion saillante unique, par exemple circulaire, ou formée par une pluralité de zones saillantes. L'épaulement périphérique 18 et le dispositif de liaison 2 forment un joint annulaire.

Le trottoir périphérique 2d s'étend continument autour du dispositif de liaison 2 et la prothèse dentaire 3 réalise un contact périphérique continu avec le trottoir périphérique 2d. Le contact entre la prothèse dentaire 3 et le trottoir 2d forme un anneau. Afin d'améliorer l'étanchéité entre le dispositif de liaison 2 et la prothèse dentaire 3, la face supérieure du trottoir périphérique 2d est inclinée vers le haut depuis le centre vers la périphérie du dispositif de liaison 2, le haut correspondant au plan supérieur formé par le somment du dispositif de liaison 2, à l'opposé du bas formé par la zone de contact avec le pilier 1b ou l'implant 1a. L'extrémité terminale de la prothèse dentaire 3 destinée à venir en contact avec le trottoir périphérique 2d est plane. Une force plus importante est présente dans la portion externe du trottoir périphérique 2d pour mieux comprimer la couche de recouvrement le cas échéant.

L'angle d'inclinaison est faible, avantageusement inférieur à 10°, préférentiellement inférieur à 5° et encore plus préférentiellement compris entre 0,5° et 2,5°. Dans les modes de réalisation illustrés, le plan de référence est formé par la partie centrale de la face supérieure du trottoir périphérique 2d. En se déplaçant vers la périphérie, la face supérieure s'incline vers le haut selon l'angle d'inclinaison. Dans l'exemple de réalisation illustré, le plan d'interface avec l'ancrage est parallèle au plan défini par la portion centrale de la face supérieure du trottoir périphérique 2d.

Dans une alternative de réalisation, la face supérieure du trottoir périphérique 2d est plane et la face inférieure de la prothèse dentaire 3 est inclinée. La portion externe est plus basse que la portion interne pour obtenir un résultat équivalent à ce qui a été décrit précédemment. Cependant, ce mode de réalisation est plus difficile à réaliser avec une prothèse dentaire 3 en céramique. Selon une autre approche, la couche de recouvrement présente une l'augmentation progressive de l'épaisseur de l'enrobage du centre vers l'extérieur de manière à former un joint plus efficace entre la prothèse 3 et le trottoir périphérique 2d.

De manière préférentielle, la section transversale du trottoir périphérique 2d est supérieure à la section transversale de la prothèse dentaire 3. Avantageusement, la section de la prothèse dentaire 3 est inférieure à la section du trottoir périphérique 2d d'une valeur comprise entre 100µm et 200µm. De cette manière, le trottoir 2d déborde tout autour de la zone de contact entre le trottoir périphérique 2d et la prothèse dentaire 3 ce qui favorise l'obtention d'une bonne étanchéité. Un tel mode de réalisation est illustré aux figures 4, 6, 8, 9, 11, 14a, 15, 16b, 17, 18, 19a, 20, 21 et 22.

La figure 12 illustre un mode de réalisation avec le trottoir périphérique 2d qui s'étend au-delà de la prothèse 3. La figure 12 illustre également un mode de réalisation dans lequel la portion extérieure du trottoir périphérique 2d se relève en direction de la prothèse 3 depuis la partie centrale vers la partie périphérique. La partie gauche de la figure illustre une reconstruction dentaire implantaire avec un ancrage 1 surmonté par un plot 5. Le plot 5 est recouvert par le dispositif de liaison 2. Le bloqueur 11 est monobloc avec la butée 10 qui vient en appui sur le plot 5. La vis de fixation 4 se visse dans la portion taraudée 6. La tête de vis 4a appuie sur la butée 10. La tête de vis 4a déforme le bloqueur 11 qui passe à travers le ou les trous traversants du corps ce qui bloque le bloqueur 11 et le dispositif de liaison 2 contre le plot 5.

Dans un mode de réalisation avantageux, la couche de recouvrement comporte des particules métalliques ou des ions métalliques, par exemple des particules d'argent ou des ions argent. Un mode de réalisation a déjà été illustré dans le document US5984905. L'utilisation d'ions métalliques permet d'éviter la duplication de l'ADN bactérien.

Dans un mode de réalisation particulier, le bloqueur 11 est déformé élastiquement entre la position rentrée et la position étendue. L'installation de la vis de fixation 4 permet de basculer élastiquement de la position rentrée à la position étendue. Le retrait de la vis de fixation 4 permet de basculer élastiquement de la position étendue à la position rentrée ce qui permet de désolidariser la prothèse 3 et le dispositif de liaison 2.

Dans un autre mode de réalisation particulier, le bloqueur **11** est déformé plastiquement entre la position rentrée et la position étendue. L'installation de la vis de fixation 4 permet de basculer de la position rétractée à la position étendue ce qui bloque la prothèse dentaire 3 contre le dispositif de liaison 2. Le retrait de la vis de fixation 4 ne permet pas de basculer de la position étendue à la position rentrée. La prothèse 3 et le dispositif de liaison 2 restent fixés l'un à l'autre ce qui peut faciliter le démontage de la reconstruction dentaire. Il est alors avantageux de réaliser le bloqueur 11 ou tout le dispositif de liaison 2 en matériau à mémoire de forme. En chauffant le bloqueur 11 au-delà d'une température seuil, il est possible de ramener le bloqueur 11 dans la position rétractée et donc de désolidariser la prothèse dentaire 3 et le dispositif de liaison 2. Par exemple la température seuil est supérieure à 100°C pour obtenir le changement de phase et le changement de forme. Le bloqueur 11 revient dans la position rétractée. La désolidarisation entre la prothèse 3 et le dispositif de liaison 2 est réalisé après désolidarisation avec l'ancrage 1 ce qui est plus facile à gérer.

Les modes de réalisation décrits précédemment sont particulièrement avantageux pour la formation d'une reconstruction dentaire unitaire ou plurale. Cela permet de former une prothèse transvissée, c'est-à-dire maintenue au moyen d'une vis de fixation 4 se vissant dans un ancrage 1 implantaire ce qui facilite son montage et son démontage. Le ou les dispositifs d'anti-rotation peuvent être formés facilement et de manière compacte. Une fixation importante est obtenue sans colle ou scellement.

Les dimensions du dispositif de liaison 2 étant mieux maitrisées, il est plus facile de déposer la couche de recouvrement pour améliorer l'étanchéité de la reconstruction sans engendrer des zones de concentrations de contraintes.

La prothèse 3 définit une cavité qui reçoit le dispositif de liaison 2 traversé par la vis de fixation 4. De manière à pouvoir visser ou dévisser la vis de fixation 4 dans des positions difficiles, l'ouverture terminale de la tête de vis 4a est préférentiellement munie d'une ouverture cylindrique ou cylindro-conique pour recevoir un tournevis à extrémité sphérique. Il est alors plus facile de visser ou dévisser la vis de fixation lorsque le tournevis n'est pas selon l'axe longitudinal de la vis de fixation. Différents modes de réalisation ont été présentés dans les documents WO2019/168671 et EP2607722.

De manière privilégiée, le dispositif de liaison 2 est fixé à la prothèse dentaire 3 préalablement à l'installation du dispositif de liaison 2 sur l'ancrage 1. Le dispositif de liaison 2 fixé à la prothèse dentaire 3 peut être également séparé au moyen d'un extracteur si des retouches de la prothèse dentaire sont nécessaires. L'ensemble est dépourvu de la vis de fixation 4. Une fois l'ensemble posé sur le pilier 1b ou l'implant 1a, la vis de fixation passe à travers le trou traversant 15 et le trou traversant 9. L'installation de la vis de fixation 4 agit sur le bloqueur 11 qui se déforme pour rendre la prothèse dentaire 3 indissociable du dispositif de liaison 2. Il est alors possible d'installer l'ensemble sur le pilier 1b ou l'implant 1a. Cet assemblage facilite le travail du praticien qui peut réaliser l'assemblage hors de la cavité buccale, c'est-à-dire dans une zone plus spacieuse et sans danger pour le patient qui pourrait ingérer ces composants.

De manière avantageuse, l'extrémité inférieure du dispositif de liaison 2 et l'ancrage 1 sont munis d'un ou de plusieurs dispositifs d'encliquetage 16 qui sont configurés pour encliqueter le dispositif de liaison 2 sur l'ancrage 1. Le ou les dispositifs d'encliquetage 16 se déforment élastiquement pour permettre de fixer le dispositif de liaison 2 sur l'ancrage 1 et de le retirer facilement par la suite sans avoir à visser la vis de fixation 4. Le dispositif d'encliquetage 16 ne permet pas de supporter les forces masticatoires et ne permet pas de s'affranchir de la vis de fixation 4. Dans le mode de réalisation illustré, le dispositif d'encliquetage est formé par des ailettes formées dans la partie inférieure du dispositif de liaison 2.

Les ailettes sont terminées par une zone saillante qui est destinée à s'insérer dans une rainure 17 du pilier 1b ou de l'implant 1a. Une configuration opposée est possible. Lors de la fixation du dispositif de liaison 2 sur le pilier 1b ou l'implant 1a, on déforme les ailettes qui s'introduisent dans la rainure 20.

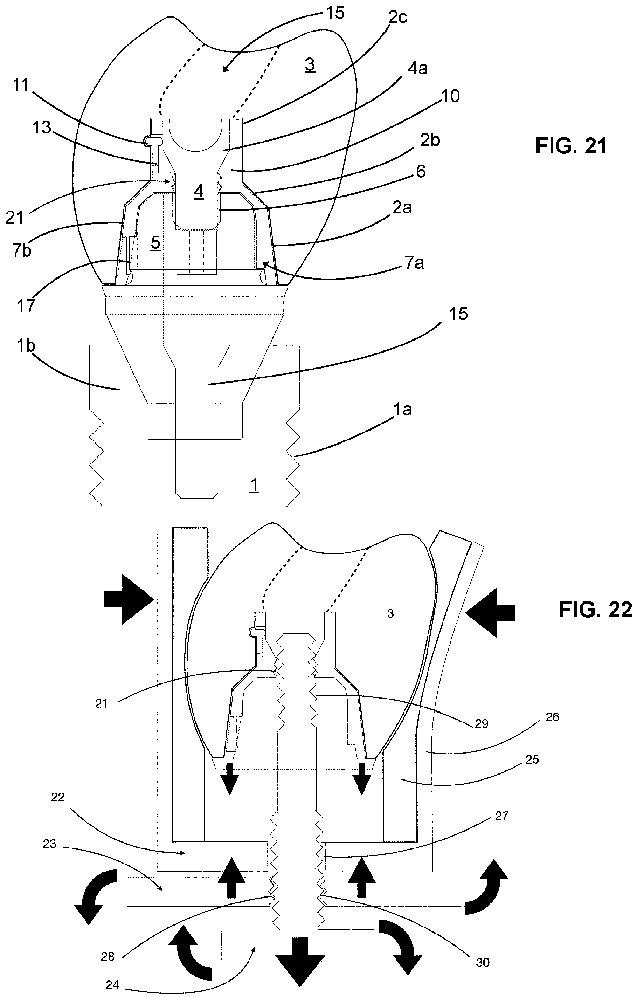

Lorsque le bloqueur 11 est configuré pour s'insérer dans la prothèse 3 en l'absence de sollicitation, afin de faciliter la séparation entre la prothèse 3 et le dispositif de liaison 2, il est préférable d'utiliser un extracteur 22 tel que celui illustré à la figure 22. Cet extracteur 22 est particulièrement avantageux lorsque le bloqueur 11 n'est pas réalisé dans un alliage à mémoire de forme qui est configuré pour autoriser la désolidarisation entre la prothèse 3 et le dispositif de liaison 2 lorsque le bloqueur 11 est chauffé au-delà d'une température seuil.

Il est avantageux que le trou traversant 9 soit fileté de préférence dans la zone de butée 10, c'est-à-dire entre la butée 10 recevant la tête de vis et la cavité recevant le plot 5. La portion filetée 21 du trou traversant 9 glisse le long d'une première portion filetée 29 de la tige filetée. L'extracteur 26 possède également un élément de préhension 25 qui vient en contact de la prothèse 3 et qui s'oppose au déplacement de la prothèse 3. L'élément de préhension 25 est traversé par la tige filetée. La tige filetée glisse dans le filetage 21 de la butée 10 du dispositif de liaison 2 et la rotation de la tige filetée génère une force sur le dispositif de liaison 2 selon l'axe longitudinal de la tige filetée. L'élément de préhension 25 en contact de la prothèse 3 s'oppose au déplacement de la prothèse 3 ce qui introduit un effort entre la prothèse 3 et le dispositif de liaison 2 qui a pour effet de désolidariser la prothèse 3 et le dispositif de liaison 2. Il est avantageux que la tige filetée possède une deuxième portion filetée 30 qui glisse dans une plaque de maintien 23. La plaque de maintien 23 possède une portion filetée 28. La plaque de maintien 23 vient en appui sur l'extracteur de manière à pousser l'extracteur 26 vers l'ensemble formé par la prothèse 3 et le dispositif de liaison 2. La première portion filetée 29 tire le dispositif de liaison 2 en direction de la plaque de maintien 23. La tige de fixation 4 ne possède pas un filetage qui glisse le long du filetage 21 de la zone de butée.

De manière avantageuse, la reconstruction dentaire est réalisée sur un modèle de laboratoire.

## Revendications

1. Dispositif de liaison (2) pour fixer une prothèse (3) de reconstitution dentaire sur un ancrage (1) implantaire maxillaire, le dispositif de liaison (2) comportant :
- un corps s'étendant selon une direction longitudinale avec une extrémité de pied et une extrémité de tête, le corps définissant un trou traversant qui relie l'extrémité de pied à l'extrémité de tête et destiné à recevoir une vis de fixation (4), l'extrémité de pied étant destinée à venir en appui sur l'ancrage (1) implantaire maxillaire ;
- une butée (10) destinée à bloquer une tête de vis (4a) de ladite vis de fixation (4) pour fixer le dispositif de liaison (2) à l'ancrage (1) implantaire maxillaire ;
- un bloqueur (11) fixé au corps, le bloqueur (11) est déformable et présente une position rétractée et une position d'extension, la position d'extension ayant une section externe plus importante que la section de la position rétractée dans lequel, en position d'extension, le bloqueur est destiné à s'insérer dans au moins un renfoncement (12) d'une prothèse (3) recouvrant le dispositif de liaison (2) pour immobiliser la prothèse (3) sur l'élément de liaison (2) selon ladite direction longitudinale ;
- une première partie d'un dispositif antirotation externe (7b) destiné à empêcher la rotation de la prothèse (3) par rapport au dispositif de liaison (2) ;
- le bloqueur (11) possède une position de repos qui est la position d'extension pour monter fixement la prothèse (3) sur le dispositif de liaison (2) en l'absence de la vis de fixation (4) ;
dispositif de liaison (2) **caractérisé en ce que** :
- le corps possède une section externe décroissante depuis l'extrémité de pied jusqu'à l'extrémité de tête et dans lequel une paroi externe du corps forme la première partie d'un dispositif antirotation externe (7b) à partir de l'extrémité de pied ;
- une face interne du corps définit une cavité destinée à recevoir un plot (5) saillant de l'ancrage (1) implantaire maxillaire, la cavité présentant une section décroissante depuis l'extrémité de pied jusqu'à une face sommitale, le trou traversant débouchant dans la face sommitale pour le passage de la vis de fixation (4) et l'extrémité de pied formant un anneau autour du plot (5), la cavité étant en vis-à-vis de la première partie du dispositif antirotation externe (7b) perpendiculairement à la direction longitudinale ;
- la butée (10) est disposée entre le bloqueur (11) et la cavité selon la direction longitudinale.

2. Dispositif de liaison (2) pour prothèse (3) de reconstitution dentaire selon la revendication 1 dans lequel le bloqueur (11) est en alliage à mémoire de forme, le bloqueur (11) étant destiné à être déformé plastiquement de la position rétractée à la position étendue par insertion de la tête de vis (4a) jusqu'à la butée (10).

3. Dispositif de liaison (2) pour prothèse (3) de reconstitution dentaire selon l'une quelconque des revendications 1 à 2 dans lequel la paroi interne du corps définissant la cavité forme une première partie d'un dispositif antirotation interne (7a) configuré pour bloquer la rotation du dispositif de liaison par rapport au plot (5), le dispositif antirotation interne (7a) s'étendant depuis l'extrémité de pied en direction de l'extrémité de tête, la première partie du dispositif d'antirotation interne (7a) étant en vis-à-vis de la première partie du dispositif d'antirotation externe (7b) perpendiculairement à l'axe longitudinal.

4. Dispositif de liaison (2) pour prothèse (3) de reconstitution dentaire selon l'une quelconque des revendications 1 à 3 dans lequel la paroi externe du corps est recouverte par une couche de recouvrement en matériau polymère compressible.

5. Dispositif de liaison (2) pour prothèse (3) de reconstitution dentaire selon l'une quelconque des revendications 1 à 4 dans lequel le dispositif antirotation externe (7b) est distinct du bloqueur (11) et dans lequel le dispositif antirotation externe (7b) s'étend depuis l'extrémité de pied du corps ou depuis un trottoir périphérique destiné à recevoir le pied de la prothèse (3).

6. Dispositif de liaison (2) pour prothèse (3) de reconstitution dentaire selon l'une quelconque des revendications 1 à 5 dans lequel le dispositif antirotation externe (7b) présente une section plus importante que la section du bloqueur (11) selon un plan d'observation perpendiculaire à l'axe longitudinal.

7. Système de liaison pour prothèse (3) de reconstitution dentaire comportant un dispositif de liaison selon l'une quelconque des revendications 1 à 6 et comportant une vis de fixation (4) ayant une tête de vis (4a) à section circulaire pour avoir une déformation constante du bloqueur (11) indépendamment de l'enfoncement de la tête de vis (4a) dans le trou traversant, la tête de vis (4a) formant un obstacle empêchant la déformation du bloqueur (11) depuis la position d'extension jusqu'à la position rétractée lorsque la tête de vis (4a) est en appui sur la butée (10).

8. Système de liaison pour prothèse (3) de reconstitution dentaire selon la revendication précédente dans lequel la vis de fixation (4) possède une longueur qui est inférieure à la longueur du dispositif de liaison (2), la longueur étant mesurée selon l'axe longitudinal.

9. Système de liaison pour prothèse (3) de reconstitution dentaire selon l'une des revendications 7 et 8 comportant un ancrage (1) destiné à être installé dans un os maxillaire, l'ancrage (1) possédant un plot (5) de forme convexe et destiné à être saillant d'une gencive, le plot (5) s'étendant selon une direction longitudinale et définissant une portion taraudée (6) s'étendant au moins partiellement hors de la gencive et de l'os maxillaire, le plot (5) ayant une section externe complémentaire de la section interne de la cavité, le plot (5) et la cavité formant un bloqueur de rotation (7a) configuré pour empêcher la rotation du dispositif de liaison (2) par rapport au plot (5) autour d'un axe parallèle à l'axe longitudinal, la vis de fixation (4) se vissant dans la portion taraudée (6), le dispositif de liaison (2) étant monté amovible par rapport au plot (5).

10. Système de liaison pour prothèse (3) de reconstitution dentaire selon la revendication précédente dans lequel, la portion taraudée (6) ne s'étend pas au-delà de la hauteur de recouvrement par le dispositif de liaison (2) sur l'ancrage (1).

11. Système de liaison pour prothèse (3) de reconstitution dentaire selon l'une des revendications 9 et 10 précédente dans lequel le dispositif de liaison (2) et l'ancrage (1) définissent un dispositif d'encliquetage (16, 17) configuré pour fixer le dispositif de liaison (2) sur l'ancrage 1 par déformation élastique.

12. Système de liaison pour prothèse (3) de reconstitution dentaire selon l'une quelconque des revendications 9 à 11 dans lequel l'ancrage (1) possède un pilier implantaire définissant une gorge annulaire (19) et dans lequel une zone de pied (2a) du dispositif de liaison (2) possède une portion saillante (20) s'insérant dans la gorge annulaire (19), la zone de pied (2a) s'étendant radialement depuis la portion saillante (20) vers l'extérieur pour former une zone de base en contact avec une zone d'appui sur le pilier implantaire.

13. Reconstitution dentaire comportant un système de liaison selon l'une quelconque des revendications 9 à 12 et comportant une prothèse (3) possédant un trou traversant (15) débouchant sur le trou traversant (9) du dispositif de liaison (2), le trou traversant (15) de la prothèse (3) s'élargissant depuis son extrémité apicale jusqu'à son extrémité coronaire.

14. Reconstitution dentaire selon la revendication précédente dans laquelle la vis de fixation (4) est dépourvue de contact avec la prothèse (3).

15. Reconstitution dentaire selon l'une des revendications 13 et 14 dans laquelle la prothèse (3) est dépourvue de contact avec l'ancrage (1).

16. Procédé de réalisation d'une reconstruction dentaire comportant les étapes suivantes :
- fournir un ancrage (1) destiné à être fixé sur un os maxillaire d'un modèle de laboratoire, l'ancrage (1) possédant un plot (5) destiné à être monté saillant par rapport à la gencive, le plot (5) définissant une portion taraudée (6) s'étendant au moins partiellement hors de la gencive et de l'os maxillaire ;
(6),
- fournir un dispositif de liaison (2) selon l'une quelconque des revendications 1 à 6 ;
- fournir une prothèse (3) définissant un trou traversant (15) ;
- poser le dispositif de liaison (2) et la prothèse dentaire (3) sur le plot (5), le dispositif de liaison se trouvant entre le plot (5) et la prothèse (3) ;
- faire passer une vis de fixation (4) à travers le trou traversant (15) de la prothèse (3) et le trou traversant (9) du dispositif de liaison (2) ;
- visser la vis de fixation (4) dans la zone taraudée (6) jusqu'à venir en appui de la butée (10), la vis de fixation (4) fixant le dispositif de liaison (2) sur l'ancrage (1) et déformant le bloqueur (11) pour que le bloqueur (11) s'introduise dans au moins un renfoncement (12) de la prothèse (3) pour monter fixement le dispositif de liaison (2) et la prothèse (3) selon la direction longitudinale,
- retirer la vis de fixation (4) et détacher l'ensemble dispositif de liaison (2) et la prothèse (3) de l'ancrage (1) d'un modèle de laboratoire.

## Patentansprüche

1. Verbindungsvorrichtung (2) zum Befestigen einer Zahnrekonstruktionsprothese (3) an einer Oberkieferimplantat-Verankerung (1), wobei die Verbindungsvorrichtung (2) umfasst:
- einen in einer Längsrichtung verlaufenden Körper mit einem Fußende und einem Kopfende, wobei der Körper ein Durchgangsloch (9) definiert, welches das Fußende mit dem Kopfende verbindet und dazu bestimmt ist, eine Befestigungsschraube (4) aufzunehmen, wobei das Fußende dazu bestimmt ist, an der Oberkieferimplantat-Verankerung (1) in Anlage zu kommen;
- einen Anschlag (10), der dazu bestimmt ist, einen Schraubenkopf (4a) der Befestigungsschraube (4) zum Befestigen der Verbindungsvorrichtung (2) an einer Oberkieferimplantat-Verankerung (1) zu blockieren;
- einen Blockierer (11), der am Körper befestigt ist, wobei der Blockierer (11) verformbar ist und eine zurückgezogene Position und eine ausgezogene Position aufweist, wobei die ausgezogene Position einen größeren Außenquerschnitt hat als der Querschnitt der zurückgezogenen Position, wobei der Blockierer (11) dazu bestimmt ist, in der ausgezogenen Position in mindestens eine Vertiefung (12) einer Prothese (3) einzugreifen, die die Verbindungsvorrichtung (2) überdeckt, um die Prothese (3) in der Längsrichtung an der Verbindungsvorrichtung (2) zu fixieren;
- einen ersten Teil einer externen Verdrehsicherung (7b), die dazu bestimmt ist, die Drehung der Prothese (3) relativ zur Verbindungsvorrichtung (2) zu verhindern;
- wobei der Blockierer (11) eine Ruheposition aufweist, welche die ausgezogene Position ist, um die Prothese (3) in Abwesenheit der Befestigungsschraube (4) an der Verbindungsvorrichtung (2) fest anzubringen;
wobei die Verbindungsvorrichtung (2) **dadurch gekennzeichnet ist, dass**:
- der Körper einen Außenquerschnitt hat, der vom Fußende zum Kopfende hin abnehmend ist, und wobei eine Außenwand des Körpers vom Fußende aus den ersten Teil einer externen Verdrehsicherung (7b) bildet;
- eine Innenseite des Körpers einen Hohlraum definiert, der dazu bestimmt ist, einen vorspringenden Pfosten (5) der Oberkieferimplantat-Verankerung (1) aufzunehmen, wobei der Hohlraum einen Querschnitt aufweist, der vom Fußende zu einer Scheitelfläche hin abnehmend ist, wobei das Durchgangsloch (9) für den Durchgang der Befestigungsschraube (4) in die Scheitelfläche einmündet und der Fußende um den Pfosten (5) herum einen Ring bildet, wobei der Hohlraum dem ersten Teil der externen Verdrehsicherung (7b) senkrecht zur Längsrichtung gegenüberliegt;
- der Anschlag (10) in der Längsrichtung zwischen dem Blockierer (11) und dem Hohlraum angeordnet ist.

2. Verbindungsvorrichtung (2) für eine Zahnrekonstruktionsprothese (3) nach Anspruch 1, wobei der Blockierer (11) aus einer Formgedächtnislegierung besteht, wobei der Blockierer (11) dazu bestimmt ist, durch Einführen des Schraubenkopfes (4a) bis zum Anschlag (10) plastisch von der zurückgezogenen Position in die ausgezogene Position verformt zu werden.

3. Verbindungsvorrichtung (2) für eine Zahnrekonstruktionsprothese (3) nach einem der Ansprüche 1 bis 2, wobei die Innenwand des Körpers, die den Hohlraum definiert, einen ersten Teil einer internen Verdrehsicherung (7a) bildet, die dazu konfiguriert ist, die Drehung der Verbindungsvorrichtung (2) relativ zum Pfosten (5) zu blockieren, wobei die interne Verdrehsicherung (7a) sich vom Fußbende in Richtung des Kopfbendes erstreckt, wobei der erste Teil der internen Verdrehsicherung (7a) dem ersten Teil der externen Verdrehsicherung (7b) senkrecht zur Längsachse gegenüberliegt.

4. Verbindungsvorrichtung (2) für eine Zahnaufbauprothese (3) nach einem der Ansprüche 1 bis 3, wobei die Außenwand des Körpers mit einer Deckschicht aus einem komprimierbaren Polymermaterial bedeckt ist.

5. Verbindungsvorrichtung (2) für eine Zahnrekonstruktionsprothese (3) nach einem der Ansprüche 1 bis 4, wobei die externe Verdrehsicherung (7b) vom Blockierer (11) getrennt ist, und wobei die externe Verdrehsicherung (7b) sich vom Fußende des Körpers oder von einer umlaufenden Stufe aus erstreckt, die dazu bestimmt ist, den Fuß der Prothese (3) aufzunehmen.

6. Verbindungsvorrichtung (2) für eine Zahnrekonstruktionsprothese (3) nach einem der Ansprüche 1 bis 5, wobei die externe Verdrehsicherung (7b) einen Querschnitt aufweist, der in einer Ebene senkrecht zur Längsachse gesehen größer ist als der Querschnitt des Blockierers (11).

7. Verbindungssystem für eine Zahnrekonstruktionsprothese (3), umfassend eine Verbindungsvorrichtung (2) nach einem der Ansprüche 1 bis 6, und umfassend eine Befestigungsschraube (4), die einen Schraubenkopf (4a) mit kreisförmigem Querschnitt aufweist, um unabhängig von der Versenkung des Schraubenkopfs (4a) im Durchgangsloch (9) eine konstante Verformung des Blockierers (11) zu erhalten, wobei der Schraubenkopf (4a) ein Hindernis bildet, das die Verformung des Blockierers (11) von der ausgezogenen Position in die zurückgezogene Position verhindert, wenn der Schraubenkopf (4a) am Anschlag (10) anliegt.

8. Verbindungssystem für eine Zahnrekonstruktionsprothese (3) nach dem vorherigen Anspruch, wobei die Befestigungsschraube (4) eine Länge hat, die kleiner als die Länge der Verbindungsvorrichtung (2) ist, wobei die Länge entlang der Längsachse gemessen wird.

9. Verbindungssystem für eine Zahnrekonstruktionsprothese (3) nach einem der Ansprüche 7 und 8, umfassend eine Verankerung (1), die dazu bestimmt ist, in einem Oberkieferknochen installiert zu werden, wobei der Verankerung (1) einen Pfosten (5) aufweist, der konvex geformt ist und dazu bestimmt ist, aus einem Zahnfleisch vorzuspringen, wobei der Pfosten (5) sich in einer Längsrichtung erstreckt und einen gewindeten Abschnitt (6) definiert, der sich mindestens partiell außerhalb des Zahnfleisches und des Oberkieferknochens erstreckt, wobei der Pfosten (5) einen Außenquerschnitt hat, der komplementär zum Innenquerschnitt des Hohlraums ist, wobei der Pfosten (5) und der Hohlraum eine Verdrehsicherung (7a) bilden, die dazu konfiguriert ist, die Drehung der Verbindungsvorrichtung (2) relativ zum Pfosten (5) um eine Achse parallel zur Längsachse zu verhindern, wobei die Befestigungsschraube (4) in den gewindeten Abschnitt (6) geschraubt wird, wobei die Verbindungsvorrichtung (2) in Bezug auf den Pfosten (5) abnehmbar montiert ist.

10. Verbindungssystem für eine Zahnrekonstruktionsprothese (3) nach dem vorherigen Anspruch, wobei der gewindete Abschnitt (6) sich nicht über die Überdeckungshöhe durch die Verbindungsvorrichtung (2) auf der Verankerung (1) hinaus erstreckt.

11. Verbindungssystem für eine Zahnrekonstruktionsprothese (3) nach einem der Ansprüche 9 und 10, wobei die Verbindungsvorrichtung (2) und die Verankerung (1) eine Einrastvorrichtung (16, 17) definieren, die dazu konfiguriert ist, die Verbindungsvorrichtung (2) durch elastische Verformung an der Verankerung (1) zu befestigen.

12. Verbindungssystem für eine Zahnaufbauprothese (3) nach einem der Ansprüche 9 bis 11, wobei der Verankerung (1) einen Implantatpfeiler aufweist, der eine ringförmige Nut (19) definiert, und wobei ein Fußbereich (2a) der Verbindungsvorrichtung (2) einen vorspringenden Abschnitt (20) aufweist, der in die ringförmige Nut (19) passt, wobei der Fußbereich (2a) sich vom vorspringenden Abschnitt (20) radial nach außen erstreckt, um einen Basisbereich zu bilden, der mit einem Auflagebereich auf dem Implantatpfeiler in Kontakt ist.

13. Zahnrekonstruktion, umfassend ein Verbindungssystem nach einem der Ansprüche 9 bis 12, und umfassend eine Prothese (3), die ein Durchgangsloch (15) aufweist, das in das Durchgangsloch (9) der Verbindungsvorrichtung (2) einmündet, wobei das Durchgangsloch (15) der Prothese (3) sich von ihrem apikalen Ende zu ihrem koronalen Ende hin erweitert.

14. Zahnrekonstruktion nach dem vorherigen Anspruch, wobei die Befestigungsschraube (4) keinen Kontakt mit der Prothese (3) hat.

15. Zahnrekonstruktion nach einem der Ansprüche 13 und 14, wobei die Prothese (3) keinen Kontakt mit der Verankerung (1) hat.

16. Verfahren zur Durchführung einer Zahnrekonstruktion, umfassend die folgenden Schritte:
- Bereitstellen einer Verankerung (1), die dazu bestimmt ist, an einem Oberkieferknochen eines Labormodells befestigt zu werden, wobei die Verankerung (1) einen Pfosten (5) aufweist, der dazu bestimmt ist, aus dem Zahnfleisch vorspringend montiert zu werden, wobei der Pfosten (5) einen gewindeten Abschnitt (6) definiert, der sich mindestens partiell außerhalb des Zahnfleisches und des Oberkieferknochens erstreckt;
- Bereitstellen einer Verbindungsvorrichtung (2) nach einem der Ansprüche 1 bis 6;
- Bereitstellen einer Prothese (3), die ein Durchgangsloch (15) definiert;
- Setzen der Verbindungsvorrichtung (2) und der Zahnprothese (3) auf den Pfosten (5), wobei die Verbindungsvorrichtung sich zwischen dem Pfosten (5) und der Zahnprothese (3) befindet;
- Hindurchführen einer Befestigungsschraube (4) durch das Durchgangsloch (15) der Prothese (3) und das Durchgangsloch (9) der Verbindungsvorrichtung (2);
- Einschrauben der Befestigungsschraube (4) in den gewindeten Bereich (6), bis sie am Anschlag (10) in Anlage kommt, wobei die Befestigungsschraube (4) die Verbindungsvorrichtung (2) an der Verankerung (1) befestigt und den Blockierer (11) verformt, damit der Blockierer (11) in mindestens eine Vertiefung (12) der Prothese (3) eingeführt wird, um die Verbindungsvorrichtung (2) und die Prothese (3) in der Längsrichtung fest anzubringen;
- Entfernen der Befestigungsschraube (4) und Abnehmen der aus der Verbindungsvorrichtung (2) und der Prothese (3) gebildeten Einheit von der Verankerung (1) eines Labormodells.

## Claims

1. A coupling device (2) for securing a dental restoration prosthesis (3) to a maxillary implant anchorage (1), the coupling device (2) comprising:
- a body extending in a longitudinal direction with a foot end and a head end, the body defining a through-hole extending from the foot end to the head end and designed to receive a fixing screw (4), the foot end being designed to bear on the maxillary implant anchorage (1);
- a stop (10) designed to block a screw head (4a) of said fixing screw (4) to fix the coupling device (2) to the maxillary implant anchorage (1);
- a blocker (11) fixed to the body, the blocker (11) is deformable and has a retracted position and an extended position, the extended position having a larger external cross-section than the cross-section of the retracted position wherein, in the extended position, the blocker (11) is designed to be inserted into at least one recess (12) of a prosthesis (3) covering the coupling device (2) to immobilize the prosthesis (3) on the coupling element (2) along said longitudinal direction;
- a first part of an external anti-rotation device (7b) designed to prevent rotation of the prosthesis (3) relative to the coupling device (2);
- the blocker (11) has a resting position which is the extended position for fixedly mounting the prosthesis (3) on the coupling device (2) in the absence of the fixing screw (4);
coupling device (2) **characterized in that**:
- the body has an external cross-section decreasing from the foot end to the head end and wherein an external wall of the body forms the first part of an external anti-rotation device (7b) from the foot end;
- an internal face of the body defines a cavity designed to receive a head (5) projecting from the maxillary implant anchorage (1), the cavity having a cross-section decreasing from the foot end to a top face, the through hole (9) opening into the top face for the passage of the fixing screw (4) and the foot end forming a ring around the head (5), the cavity facing the first part of the external anti-rotation device (7b) perpendicularly to the longitudinal direction;
- the stop (10) is arranged between the blocker (11) and the cavity in the longitudinal direction.

2. The coupling device (2) for a dental restoration prosthesis (3) according to claim 1 wherein the blocker (11) is made from shape memory alloy, the blocker (11) being designed to be plastically deformed from the retracted position to the extended position by insertion of the screw head (4a) as far as the stop (10).

3. The coupling device (2) for a dental restoration prosthesis (3) according to one of claims 1 and 2 wherein the inner wall of the body defining the cavity forms a first part of an internal anti-rotation device (7a) configured to block rotation of the coupling device relative to the head (5), the internal anti-rotation device (7a) extending from the foot end towards the head end, the first part of the internal anti-rotation device (7a) facing the first part of the external anti-rotation device (7b) perpendicularly to the longitudinal axis.

4. The coupling device (2) for a dental restoration prosthesis (3) according to any one of claims 1 to 3 wherein the outer wall of the body is covered by a coating layer made from compressible polymer material.

5. The coupling device (2) for a dental restoration prosthesis (3) according to any one of claims 1 to 4 wherein the external anti-rotation device (7b) is distinct from the blocker (11) and wherein the external anti-rotation device (7b) extends from the foot end of the body or from a peripheral curb designed to receive the foot of the prosthesis (3).

6. The coupling device (2) for a dental restoration prosthesis (3) according to any one of claims 1 to 5 wherein the external anti-rotation device (7b) has a larger cross-section than the cross-section of the blocker (11) in an observation plane perpendicular to the longitudinal axis.

7. A coupling system for a dental restoration prosthesis (3) comprising a coupling device (2) according to any one of claims 1 to 6 and comprising a fixing screw (4) having a screw head (4a) with a circular cross-section to have a constant deformation of the blocker (11) independently of the driving of the screw head (4a) into the through hole (9), the screw head (4a) forming an obstacle preventing the deformation of the blocker (11) from the extended position to the retracted position when the screw head (4a) is bearing on the stop (10).

8. The coupling system for a dental restoration prosthesis (3) according to the preceding claim wherein the fixing screw (4) has a length that is smaller than the length of the coupling device (2), the length being measured along the longitudinal axis.

9. The coupling system for a dental restoration prosthesis (3) according to one of claims 7 and 8 comprising an anchorage (1) designed to be installed in a jaw bone, the anchorage (1) having a head (5) of convex shape and designed to be salient from a gingiva, the head (5) extending in a longitudinal direction and defining a threaded portion (6) extending at least partially outside the gingiva and the jaw bone, the head (5) having an outer cross-section that is complementary to the inner cross-section of the cavity, the head (5) and cavity forming a rotation blocker (7a) configured to prevent rotation of the coupling device (2) with respect to the head (5) around an axis parallel to the longitudinal axis, the fixing screw (4) being screwed into the threaded portion (6), the coupling device (2) being fitted removable with respect to the head (5).

10. The coupling system for a dental restoration prosthesis (3) according to the foregoing claim wherein the threaded portion (6) does not extend beyond the height of the overlap by the coupling device (2) on the anchorage (1).

11. The coupling system for a dental restoration prosthesis (3) according to one of preceding claims 9 and 10 wherein the coupling device (2) and the anchorage (1) define a clipping device (16, 17) configured to fix the coupling device (2) to the anchorage (1) by elastic deformation.

12. The coupling system for a dental restoration prosthesis (3) according to any one of claims 9 and 11 wherein the anchorage (1) has an implant abutment defining an annular groove (19) and wherein a foot region (2a) of the coupling device (2) has a projecting portion (20) fitting into the annular groove (19), the foot region (2a) extending radially outwardly from the projecting portion (20) to form a base region in contact with a bearing region on the implant abutment.

13. Dental restoration comprising a coupling system according to any one of claims 9 to 12 and comprising a prosthesis (3) having a through hole (15) opening onto the through hole (9) of the coupling device (2), the through hole (15) of the prosthesis (3) broadening out from its apical end to its coronal end.

14. A dental restoration according to the foregoing claim wherein the fixing screw (4) is devoid of contact with the prosthesis (3).

15. The dental restoration according to one of claims 13 and 14 wherein the prosthesis (3) is devoid of contact with the anchorage (1).

16. Method for fabrication a dental restoration comprising the following steps:
- providing an anchorage (1) designed to be fixed on a jaw bone of a laboratory model, the anchorage (1) having a head (5) designed to be mounted salient with respect to the gingiva, the head (5) defining a threaded portion (6) extending at least partially outside the gingiva and the jaw bone;
- providing a coupling device (2) according to any one of claims 1 to 6;
- providing a prosthesis (3) defining a through hole (15);
- placing the coupling device (2) and the dental prosthesis (3) on the head (5), the coupling device being located between the head (5) and the prosthesis (3);
- passing a fixing screw (4) through the through hole (15) of the prosthesis (3) and the through hole (9) of the coupling device (2);
- screwing the fixing screw (4) into the threaded area (6) until it presses up against the stop (10), the fixing screw (4) fixing the coupling device (2) on the anchorage (1) and deforming the blocker (11) so that the blocker (11) is inserted in at least one recess (12) of the prosthesis (3) to fixedly assemble the coupling device (2) and the prosthesis (3) in the longitudinal direction,
- removing the fixing screw (4) and detaching the assembly formed by the coupling device (2) and the prosthesis (3) from the anchorage (1) of a laboratory model.
